# EUROPEAN PATENT SPECIFICATION

(11) **EP 3 205 799 B1**
(45) Date of publication and mention of the grant of the patent: **20.03.2019**
(21) Application number: 17152567.8
(22) Date of filing: 23.01.2017
(51) Int. Cl.: E05C 19/02, E05B 63/24

(54) **SELF-RELEASING CEILING SUPPORT LATCH**
SELBSTAUSLÖSENDE DECKENHALTERUNGSVERRIEGELUNG
VERROUILLAGE DE SUPPORT DE PLAFOND À LIBÉRATION AUTOMATIQUE

(30) Priority: 12.02.2016 US 201615042678
(43) Date of publication of application: 16.08.2017
(73) Proprietor: The Boeing Company, Chicago, IL 60606-1596 (US)
(72) Inventor: CASSOU, Kevin, Chicago, IL Illinois 60606-1596 (US)
(74) Representative: Duxbury, Stephen

(56) References cited:
- EP-A1- 2 952 663
- DE-U1-202012 005 738
- FR-A1- 2 466 594
- GB-A- 614 085
- JP-U- S54 129 157

## Description

### FIELD

This disclosure pertains to a self-releasing panel support latch that allows easy installation of a panel over an opening and removal of the panel from over the opening. More specifically, this disclosure pertains to a self-releasing ceiling panel support latch that allows easy installation of a ceiling panel over an opening in an aircraft interior and removal of the ceiling panel from over the opening in the aircraft interior.

### BACKGROUND

Aesthetic covering panels are often used to cover over access openings in an aircraft interior. To gain access to the access opening behind the panel, the panel must be removable. For example aircraft interior ceiling panels are often removably secured over access openings by releasable latches. However, because the releasable latches are behind the ceiling panels they are not easily accessible.

An existing solution employed to disengage an inaccessible latch behind an aesthetic panel it supports over an access opening involves putting small pin holes through the panel. The pin holes are located in the panel just underneath the latches that releasably support the panel over the opening. The pin holes allow a small tool to be inserted through the pin holes and engage with the latches to release the latches and remove the panel from over the access opening.

Although the above is a simple solution to the problem of disengaging inaccessible latches, it is not a preferred solution. The unsightly, visible pin holes in the panels wherever there are latches that support the panels detracts from the aesthetics of the panels.

Another existing solution employed to disengage inaccessible latches behind aesthetic panels is provided by an elaborate pull cable system attached to the latches. The pull cable system allows the latches to be released and the panels to be removed by pulling on a loop on a cable. The loop on the cable is located in an accessible place near the latch to be released and the panel to be removed from the latch.

This solution also has drawbacks, especially when the cables are very long to reach accessible locations near the panels to be released. The excessively long cables create unnecessary complication and cost to the design of the releasable panels by adding more parts and additional weight to the panel latching system.

DE 20 2012 005 738.3 discloses a locking arrangement for furniture. DE 296 22 416 U1 discloses an aircraft interior panel latch that releasably supports a panel of an aircraft interior.

### SUMMARY

The self-releasing ceiling support latch of this disclosure simplifies and speeds up installation and removal of ceiling panels significantly. The latch does not require any tools, fasteners or accessible features to release and remove panels. The latch can also be used to removably support aesthetic panels other than aircraft interior ceiling panels.

The latch of this disclosure allows aesthetic interior panels, for example aircraft ceiling panels with inaccessible support latch locations to be installed and removed quickly and easily by simply moving the panels in a certain direction with a certain amount of force. The movement of the panel and specifically the panel strike supported in the latch causes the latch to automatically disengage and release the panel strike and the panel. No tool or access to the latch is required to engage a panel to the latch or disengage a panel from the latch.

The latch includes a housing that is configured to be attached to an aircraft structure adjacent an access opening that is covered by an aesthetic panel of the aircraft interior, for example a ceiling panel of the aircraft.

The housing has a first side flange and a second side flange. The second side flange is parallel with the first side flange with there being a space between the first side flange and the second side flange.

The first side flange has a slot that extends upwardly from a bottom edge of the first side flange and into the first side flange. The slot in the first side flange is configured to releasably receive a strike of an aesthetic panel in the slot.

The second side flange also has a slot that extends upwardly from a bottom edge of the second side flange and into the second side flange. The slot in the first side flange and the slot in the second side flange are aligned with each other and have substantially the same configurations.

The first side flange has a pin hole through the first side flange. The pin hole in the first side flange can have an oblong configuration, or can have a circular configuration.

The second side flange also has a pin hole through the second side flange. In one configuration of the housing, the pin hole through the second side flange can have an oblong configuration, or can have a circular configuration.

The pin holes through the first side flange and the second side flange are aligned in all configurations of the housing. The pin holes having oblong configurations that are aligned, and the pin holes having circular configurations are aligned.

A strike hold is positioned in the space between the first side flange and the second side flange. The strike hold is free to move to a limited extent in the space. The strike hold is moveable in the space between a locked position of the strike hold in the first and second slots of the respective first and second side flanges, and an unlocked position of the strike hold in the first and second slots in the respective first and second side flanges. The locked position of the strike hold in the first and second slots of the respective first and second side flanges is below the unlocked position of the strike hold in the first and second slots of the respective first and second side flanges.

A pin is provided on the strike hold. The pin on the strike hold extends into the pin hole in the first side flange and the pin hole in the second side flange. In the configuration of the housing having a circular pin hole in the first side flange and a circular pin hole in the second side flange, the pin is configured for rotating movements in opposite directions in the pin hole in the first side flange and the pin hole in the second side flange. Thus, the pin on the strike hold mounts the strike hold to the housing for pivoting movements of the strike hold through the space between the first side flange and the second side flange.

When the housing has an oblong pin hole in the first side flange and an oblong pin hole in the second side flange, the pin is one of a pair of pins on the strike hold. The pair of pins extend into the oblong pin hole in the first side flange and the pair of pins extend into the oblong pin hole in the second side flange. The pair of pins are configured for reciprocating movements through the pin hole in the first side flange and the pin hole in the second side flange. Thus, the pair of pins on the strike hold mount the strike hold to the housing for reciprocating, linear movements of the strike hold through the space between the first side flange and the second side flange.

The self-releasing latch enables easy installation of an aircraft interior ceiling panel on the latch and easy removal of the aircraft interior ceiling panel from the latch without the use of tools and/or any other external mechanism. The latch allows a ceiling panel to be installed on the latch by manually inserting a strike of the panel into the slots of the first and second side flanges. The strike on the panel is continued to be manually moved into the slots and into engagement with the strike hold. Further manual movement of the strike on the panel into the slots moves the strike hold from its locked position in the slots to its unlocked position in the slots. Further manual movement of the strike on the panel into the slots moves the strike past the strike hold, allowing the strike hold to move from its unlocked position to its locked position in the slots. This releasably attaches the panel to the latch.

To remove the panel from the latch, the panel is manually moved upwardly in the slots, causing the strike of the panel to move the strike hold from its locked position in the slots to its unlocked position in the slots. This then enables the strike on the panel to be manually removed from the slots. This removes the panel from the latch without the use of any tools or release mechanisms.

The present invention as defined by claims 1 and 15 will now be detailed with reference to the following description and drawings.

### BRIEF DESCRIPTION OF THE DRAWINGS

Figure 1 is a representation of a side elevation view of a configuration of the self-releasing ceiling support latch.
Figure 2 is a representation of a perspective view of the latch of Figure 1.
Figure 3 is a representation of the latch of Figure 1 in a panel strike release condition.
Figure 4 is a representation of a side elevation view of a second configuration of the self-releasing ceiling support latch.
Figure 5 is a representation of a perspective view of the latch of Figure 4.
Figure 6 is a representation of the latch of Figure 4 in a panel strike release condition.
Figure 7 is a representation of a side elevation view of a third configuration of the self-releasing ceiling support latch.
Figure 8 is a representation of a perspective view of the latch of Figure 7.
Figure 9 is a representation of the latch of Figure 7 in a panel strike release condition.
Figure 10 is a representation of a side elevation view fourth configuration of the self-releasing ceiling support latch.
Figure 11 is a representation of a perspective view of the latch of Figure 10.
Figure 12 is a representation of the latch of Figure 10 in a panel strike release condition.

### DESCRIPTION

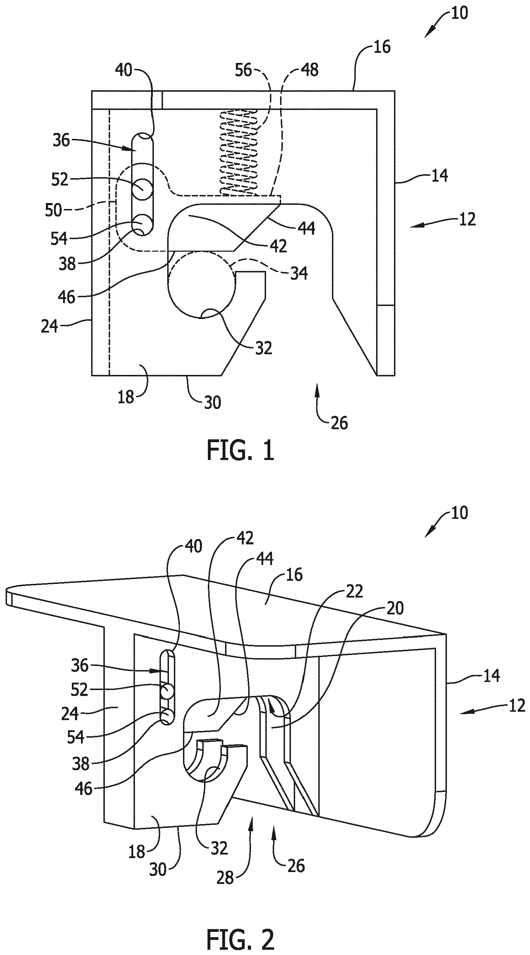

Figures 1-3 show representations of the self-releasing ceiling support latch 10. The component parts of the latch 10 to be described are constructed of materials having sufficient strength for the intended functioning of the latch 10. Materials such as molded composite, for example ULTEM resin, machined aluminum alloy, and other equivalent materials could be used in the construction of the latch housing and the internal moving components of the latch to be described. Materials such as steel and other equivalent materials could be used in the construction of the pins and springs of the latch 10 to be described.

The latch 10 includes a housing 12 that has a planar, generally vertical rear wall 14 and a planar, generally horizontal top wall 16. The rear wall 14 and/or the top wall 16 are configured to be attached to an aircraft structure that is adjacent to an access opening of the aircraft that is covered over by an aesthetic panel of the aircraft interior, for example a ceiling panel of the aircraft.

A first side flange 18 of the housing 12 is connected between the rear wall 14 and the top wall 16. The first side flange 18 is planar and is oriented generally vertically.

A second side flange 20 of the housing 12 is also connected between the rear wall 14 and the top wall 16. The second side flange 20 is also planar and oriented generally vertically. The first side flange 18 and the second side flange 20 are parallel to each other with there being a space or void 22 between the first side flange 18 and the second side flange 20. The first side flange 18 and the second side flange 20 are substantially mirror images of each other.

The housing 12 also includes a front wall 24. The front wall 24 is connected between forward edges of the first side flange 18 and the second side flange 20 and is also connected to the top wall 16.

The housing rear wall 14, top wall 16, first side flange 18, second side flange 20 and front wall 24 could all be formed integrally or as one monolithic piece.

A first slot 26 is formed into the first side flange 18 and a second slot 28 is formed into the second side flange 20. The first slot 26 and second slot 28 have substantially the same configurations. Because the first slot 26 and second slot 28 have the same configurations, only the details of the first slot 26 configuration will be described. It should be understood that the second slot 28 has the same configuration as the first slot 26 and is aligned with the first slot 26 on opposite sides of the space or void 22 between the first side flange 18 and the second side flange 20.

The first slot 26 extends vertically upwardly through a bottom edge 30 of the first side flange 18. As represented in Figures 1-3, the first slot 26 has a tapering configuration as it extends upwardly from the bottom edge 30 of the first side flange 18. This enables a strike of an aesthetic panel to be easily aligned with the first slot 26 as the strike is initially inserted into the first slot. The top of the tapered portion of the first slot 26 has a width dimension that is slightly larger than a cross-section dimension of the strike of the panel being inserted into the first slot.

As represented in Figures 1-3, the first slot 26 extends vertically upwardly into the first side flange 18 and then bends and extends horizontally across the first side flange 18. After extending horizontally through the first side flange 18 the first slot 26 then bends again and extends vertically downwardly through the first side flange 18 to a locking surface 32 of the first side flange. As represented in Figures 1-3, the locking surface 32 has a general U-shaped configuration. This configuration of the locking surface 32 mates with the exterior surface configuration of the strike 34 of an aesthetic panel represented by dashed lines in Figure 1. In the example of Figure 1, the strike 34 has a circular cross-section configuration that mates with the U-shaped configuration of the locking surface 32. If the strike 34 of the aesthetic panel had a different cross-section configuration, the locking surface 32 would be different to correspond with the configuration of the strike.

A pin hole 36 is provided through the first side flange 18. There is also a pin hole provided through the second side flange 20. The pin hole 36 through the first side flange 18 and the pin hole through the second side flange 20 are aligned and have substantially the same configurations. Therefore, only the pin hole 36 through the first side flange 18 is described. It should be understood that the pin hole through the second side flange 20 has the same construction and configuration as the pin hole 36 through the first side flange 18. As represented in Figures 1-3, the pin hole 36 has an oblong configuration. The oblong configuration of the pin hole 36 extends straight and substantially vertically through the first side flange 18. The pin hole 36 extends between a lower end surface 38 and an upper end surface 40 in the first side flange 18.

Again, the pin hole 36 through the first side flange 18 and the pin hole through the second side flange 20 have substantially the same configurations are aligned with each other on opposite sides of the space or void 22 between the first side flange 18 and the second side flange 20.

A strike hold 42 is positioned in the space or void 22 between the first side flange 18 and the second side flange 20. The strike hold 22 is constructed with a straight, angled strike engaging surface 44, a substantially horizontal bottom surface 46, a substantially horizontal top surface 48 and a substantially vertical front surface 50. The strike hold 42 has a thickness dimension between opposite planar, parallel surfaces of the strike hold 42. The thickness dimension is slightly smaller than the width dimension of the space or void 22 between the first side flange 18 and the second side flange 20. This enables the strike hold 42 to move freely upwardly and downwardly to a limited extent in the space or void 22.

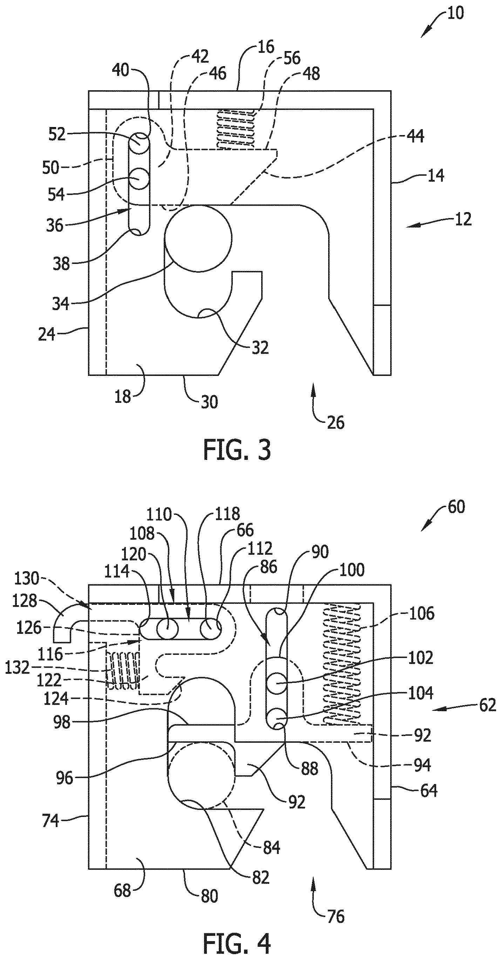

A pair of pins 52, 54 are provided on the strike hold 42. The pins 52, 54 extend through the strike hold 42. The pins 52, 54 extend into the pin hole 36 in the first side flange 18 on one side of the strike hold 42 and into the pin hole in the second side flange 20 on the opposite side of the strike hold. The pins 52, 54 are configured to slide through the pin hole 36 in the first side flange 18 and slide through the pin hole in the second side flange 20. This enables the strike hold 42 to move in reciprocating, linear movements upwardly and downwardly in the space or void 22 between the first side flange 18 and the second side flange 20, while preventing rotation of the strike hold 42 in the space or void 22. The pins 52, 54 control the movement of the strike hold 42 through the space or void 22 between a locked position of the strike hold in the first slot 26 of the first side flange 18 and the second slot 28 of the second side flange 20 where the lower pin 54 engages against the lower end surface 40 of the pin hole 36, and an unlocked position of the strike hold in the first slot 26 of the first flange 18 and the second slot 28 of the second side flange 20 where the upper pin 52 engages against the upper end surface 40 of the pin hole 36. In the locked position of the strike hold 42 the strike hold engages against a strike 34 of an aesthetic panel inserted into the slots 26, 28 and holds the strike against the locking surface 32 of the first side flange 18. The locked position of the strike hold 42 is represented in Figure 1 with the strike 34 represented in dashed lines. The unlocked position of the strike hold 42 is represented in Figure 3. In the unlocked position the strike hold 42 is above the locked position.

A spring 56 biases the strike hold 42 toward the locked position of the strike hold. In Figures 1 and 3, the spring 56 is represented as a coil spring. Other equivalent types of springs could be employed. The spring 56 is positioned in the space or void 22 between the first side flange 18 and the second side flange 20. The spring 54 engages with the top wall 16 of the housing 12 at the top of the spring and the top surface 48 of the strike hold 42 at the bottom of the spring.

In use of the latch 10 of Figures 1-3, the strike 34 of an aesthetic panel such as a ceiling panel of an aircraft is manually moved upwardly through the first slot 26 and second slot 28 from the bottom edges 30 of the first side flange 18 and second side flange 20. The strike hold 42 is initially in its locked position which is below the unlocked position. The strike 34 is moved upwardly through the first slot 26 and second slot 28 until it is adjacent the strike engaging tapered surface 44 of the strike hold 42. The strike 34 is then moved horizontally from right to left as viewed in Figures 1-3. This causes the strike 34 to come into contact with and slide across the tapered strike engaging surface 44 of the strike hold, causing the strike hold 42 to move upwardly compressing the spring 56. The strike 34 is continued to be moved horizontally until it comes to the end of the horizontal portion of the first slot 26 and second slot 28 as represented in Figure 3. The manual force exerted on the strike 34 is then removed, causing the spring 56 to push the strike hold 42 downwardly until the strike 34 is engaged against the locking surface 32 of the first flange 18 and second flange 20 as represented in Figure 1. This locks the panel and the strike 34 of the panel to the latch 10.

To remove the panel, a manual force is exerted on the panel causing the strike 34 to move upwardly in the slots 26, 28. This causes the strike hold 42 to move upwardly and compress the spring 56. In releasing or unlocking the latch 10 of Figures 1-3, and as well in the configurations of the latches to be described, it is preferred that the panel is pushed upwardly in order to release the strike 34 from the latch 10. This is an important feature because passenger carrying aircraft, generally, do not have large upward inertial loads that would unintentionally trigger the release of the strike 34 from the latch 10. In passenger carrying aircraft upward inertial forces (negative G forces) are rare and/or transient. The upward movement of the strike 34 is continued until the strike is positioned in the horizontal portions of the first slot 26 and second slot 28 as represented in Figure 3. The panel is then moved to the right causing the strike 34 to move horizontally to the right as viewed in Figures 1 and 3. When the strike 34 is located above the tapered portions of the first slot 26 and the second slot 28, the manual force exerted on the strike 34 is removed, causing the strike 34 to exit the first slot 26 and second slot 28. This also causes the spring 56 to move the strike hold 42 downwardly to its locked position represented in Figure 1. In this manner the panel and panel strike 34 are removed from the latch 10 without the use of any tools or release mechanisms.

Figures 4-6 represent a further configuration of a self-releasing ceiling support latch 60. The construction of the latch 60 represented in Figures 4-6 is very similar to that of the latch 10 represented in Figures 1-3. In view of this, the description of the latch 60 represented in Figures 4-6 will not be as detailed as that of the latch 10 represented in Figures 1-3. It should be understood that many of the features of the latch 10 described with reference to Figures 1-3 are also included in the construction of the latch 60 represented in Figures 4-6.

The latch 60 includes a housing 62 that has a rear wall 64 and a top wall 66. The rear wall 64 and/or the top wall 66 are configured to be attached to an aircraft structure.

The housing has a first side flange 68 connected between the rear wall 64 and the top wall 66. The housing also has a second side flange 70 connected between the rear wall 64 and the top wall 66. The first side flange 68 and the second side flange 70 are planar, are parallel, are mirror images of each other and have a space or void 72 between the two flanges.

The housing 62 has a front wall 74 that is connected between the first side flange 68 and the second side flange 70.

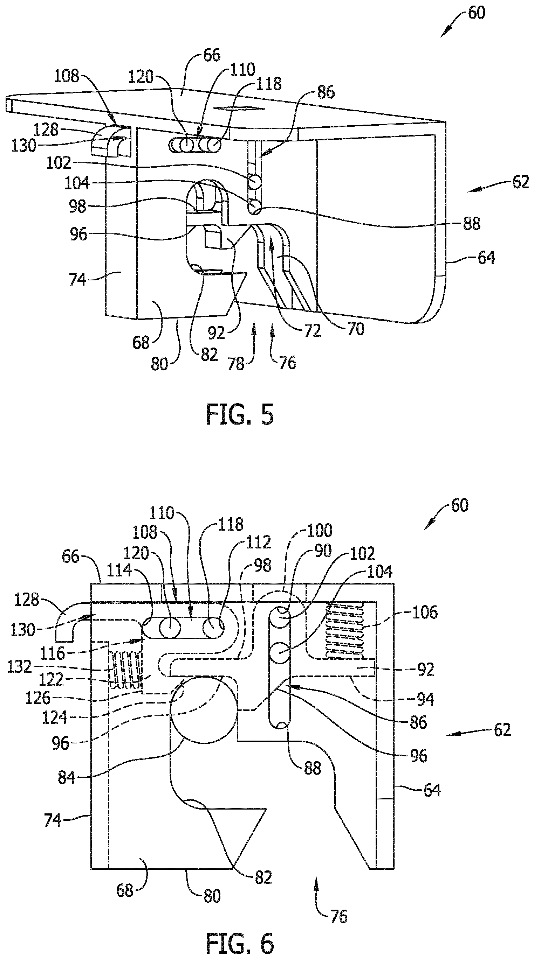

As represented in Figure 5, the first side flange 68 has a slot 76 that extends through the first side flange 68 and the second side flange 70 has a slot 78 that extends through the second side flange. The first slot 76 and the second slot 78 have substantially the same configurations. Therefore, only the configuration of the first slot 76 is described herein.

The first slot 76 extends upwardly through a bottom edge 80 of the first side flange 68. The first slot 76 then extends horizontally through the first side flange 68. The first slot 76 extends horizontally to a locking surface 82 on the first side flange 68. The locking surface 82 has a configuration that corresponds to a cross-section configuration of a strike of an aesthetic panel that is represented by dashed lines 84 in Figure 4. From the locking surface 82, the first slot 76 then extends upwardly through the first side flange 68.

The first side flange 68 has a pin hole 86 through the first side flange. The second side flange 70 also has a pin hole through the second side flange. The pin hole through the second side flange 70 has the same configuration and is aligned with the pin hole 86 in the first side flange 68. The pin hole 86 has an oblong configuration that is oriented vertically in the first side flange 68. The pin hole 86 extends from a lower end surface 88 of the pin hole to an upper end surface 90 of the pin hole. The pin hole 86 extends vertically and straight between the lower end surface 88 and the upper end surface 90.

A strike hold 92 is positioned in the space or void 72 between the first side flange 68 and the second side flange 70. The strike hold 92 is planar and has a thickness between opposite parallel side surfaces of the strike hold 42 that enables the strike hold to slide through the space or void 72 between the first side flange 68 and the second side flange 70. The strike hold 92 has a bottom surface 94 that is substantially planar and horizontal except for a tapered strike engaging surface 96 at an intermediate portion of the bottom surface 94. The strike engaging surface 96 extends downwardly from the bottom surface 94 and tapers in the direction of the horizontal portion of the first slot 76 that extends to the locking surface 82 of the first slot. The strike hold 92 also has a top surface 98. As represented in Figure 4, the top surface 98 of the strike hold 92 is substantially flat and horizontally oriented except for a lobe shaped intermediate portion 100 of the top surface.

A pair of pins 102, 104 are provided on the strike hold 92. The pins 102, 104 are positioned in the lobe shaped portion 100 of the strike hold 92. The pins 102, 104 extend outwardly from opposite sides of the strike hold 92 and into the pin hole 86 in the first side flange 68 and the pin hole in the second side flange 70. The pins 102, 104 are positioned in a same vertical plane and are dimensioned to slide easily through the pin hole 86 in the first side flange 68 and the pin hole in the second side flange 70. The pair of pins 102, 104 are configured for reciprocating vertical movements through the pin hole 86 in the first side flange 68 and the pin hole in the second side flange 70. Thus, the pair of pins 102, 104 mount the strike hold 92 to the housing 62 for reciprocating, linear movements of the strike hold 92 through the space or void 72 between the first side flange 68 and the second side flange 70. The strike hold 92 reciprocates between a lower, locked position of the strike hold represented in Figure 4 where the lower pin 104 engages against the lower end surface 88 of the pin hole 86, and an upper, unlocked position of the strike hold 92 where the upper pin 102 engages against the upper end surface 90 of the pin hole 86.

A spring 106 is positioned in the space or void 72 between the first side flange 68 and the second side flange 70. The spring 106 represented in Figures 4 and 6 is a coil spring. However, any equivalent type of spring could be used. The spring 106 has a top end that engages against the top wall 66 of the housing 62 in the space or void 72, and an opposite bottom end that engages against the top surface 98 of the strike hold 92. Thus, the spring 106 biases the strike hold 92 to its lower, locked position as represented in Figure 4.

A strike hold release/reset device 108 is provided on the housing 62. The strike hold release/reset device 108 is automatically operable to hold the strike hold 92 in the unlocked position of the strike hold in the first 76 and second 78 slots in response to the strike hold being manually moved to the unlocked position, and the strike hold release/reset device is manually operable to release the strike hold from the unlocked position to allow the strike hold to move to the locked position. The strike hold release/reset device 108 is also manually operable to reset the strike hold 92 in the locked position in the first 76 and second 78 slots in response to manual manipulation of the strike hold release/reset device.

The device 108 includes a device hole 110 through the first side flange 68 and a like device hole through the second side flange 70. The device hole 110 through the first side flange 68 and the device hole through the second side flange 70 have the same configurations and are oblong as shown in Figures 4-6. The device hole 110 in the first side flange 68 and the device hole in the second side flange 70 have the same constructions and are aligned with each other on opposite sides of the space or void 72 between the first side flange and the second side flange. Therefore, only the construction of the device hole 110 in the first side flange 68 is described. As shown in Figures 4-6, the device hole 110 is horizontally oriented and has an oblong length between a rear surface 112 of the device hole to the right in Figure 4-6 and a front surface 114 of the device hole to the left in Figure 4-6.

The strike hold release/reset device 108 also includes a catch member 116. The catch member 116 is planar and has opposite parallel surfaces that enable the catch member 116 to slide easily through the space or void 72 between the first side flange 68 and the second side flange 70.

A pair of pins 118, 120 are provided on the catch member 116. The pins 118, 120 extend into the device holes 110 formed in the first side flange 68 and the second side flange 70. The pair of pins 118, 120 mount the catch member 116 for horizontal, reciprocating linear movements relative to the housing 62. The pair of pins 118, 120 limit the horizontal, reciprocating movements of the catch member 116 between a hold position of the catch member where the pin 118 to the right in Figures 4-6 engages against the rear surface 112 of the device hole 110, and a release position of the catch member 116 where the left pin 120 shown in Figures 4-6 engages against the front surface 114 of the device hole 110.

The catch member 116 includes a catch 122 that extends downwardly from the catch member. The catch 122 has a tapered surface 124 on a rear end of the catch and a vertical surface 126 on an opposite, forward end of the catch.

The catch member 116 also has a handle 128 that extends from the main body of the catch member 116, through a hole 130 in the front wall 74 of the housing 62 to the exterior of the housing. The handle 128 is positioned outside the housing 62 where it can be easily manually grasped and manipulated.

The strike hold release/reset device 108 also includes a spring 132 positioned in the space or void 72 between the first side flange 68 and the second side flange 70, and between the flat vertical surface 126 of the catch 122 and the front wall 74 of the housing 62. In the configuration of the latch 60 shown in Figures 4-6, the spring 130 is a coil spring. Other equivalent types of springs could be employed. As represented in the drawings figures, the spring 130 biases the catch member 116 of the strike hold release/reset device 108 to the right in the drawing figures where the right pin 118 on the catch member 116 engages against the rear surface 112 of the device hole 110.

In use of the latch 60 of Figures 4-6, the strike 84 of an aesthetic panel such as a ceiling panel of an aircraft is manually moved upwardly through the first slot 76 and the second slot 78 from the bottom edges 80 of the first side flange 68 and the second side flange 70. The strike hold 92 is initially in its locked position represented in Figure 4, which is below the unlocked position. The strike 84 is moved upwardly through the first slot 76 and the second slot 78 until it is adjacent the strike engaging tapered surface 96 of the strike hold 92. The strike 84 is then moved horizontally from right to left as viewed in Figures 4-6. This causes the strike 84 to come into contact with and slide across the tapered strike engaging surface 96 of the strike hold, causing the strike hold 92 to move upwardly compressing the spring 106. The strike 84 is continued to be moved horizontally until it comes to the end of the horizontal portion of the first slot 76 and the second slot 78 and comes into engagement with the locking surface 82 of the first slot and second slot as represented in Figure 4. At this position of the strike 84 it has been moved past the portion of the strike hold bottom surface 94 having the strike engaging surface 96 and the spring 106 pushes the strike hold downwardly 92 to its locked position represented in Figure 4. This locks the panel and the strike 84 of the panel to the latch 60.

To remove the panel, a manual force is exerted on the panel causing the strike 84 to move upwardly in the slots 76, 78 from its position represented in Figure 4. This causes the strike hold 92 to move upwardly and compress the spring 106. The upward movement of the strike 84 is continued until the strike has moved the strike hold 92 to its upward, unlocked position represented in Figure 6. As the strike hold 92 is moved upwardly, the top surface 98 of the strike hold comes into engagement with the catch 122 of the catch member. The strike hold 92 engages against the tapered surface 124 of the catch 122. The continued upward movement of the strike hold 92 causes the top surface 98 of the strike hold to slide across the tapered surface 124 of the catch 122, moving the catch 122 to the left as viewed in Figures 1-4. This compresses the catch spring 132. The upward movement of the strike hold 92 is continued until the bottom surface 94 of the strike hold has moved past the catch 122 and the catch spring 130 has pushed the catch 122 to the right as represented in Figure 6. This locks the strike hold 92 in its upward, unlocked position relative to the housing 62. This also enables the strike 84 to be removed from the slots 76, 78 and the panel attached to the strike to be removed from the latch 60. In this manner, the panel and panel strike 84 are removed from the latch 60 without the use of any tools or release mechanisms.

To reset the strike hold 92, the handle 128 of the catch member 116 is manually grasped and pulled to the left as represented in Figures 4-6. This causes the catch member 116 to move to the left, compressing the catch spring 132. The manual movement of the catch member 116 is continued until the catch 122 is removed from under the bottom surface 94 of the strike hold 92. The strike hold 92 is then free to move downwardly and the spring 106 pushes the strike hold 92 downwardly through the first slot 76 and the second slot 78 until the lower pin 104 of the strike hold engages the lower end surface 88 of the pin hole 86. This positions the strike hold 92 in its lower, locked position represented in Figure 4 where the strike hold is reset to receive and lock a strike of a panel inserted into the first slot 76 and second slot 78 of the latch 60.

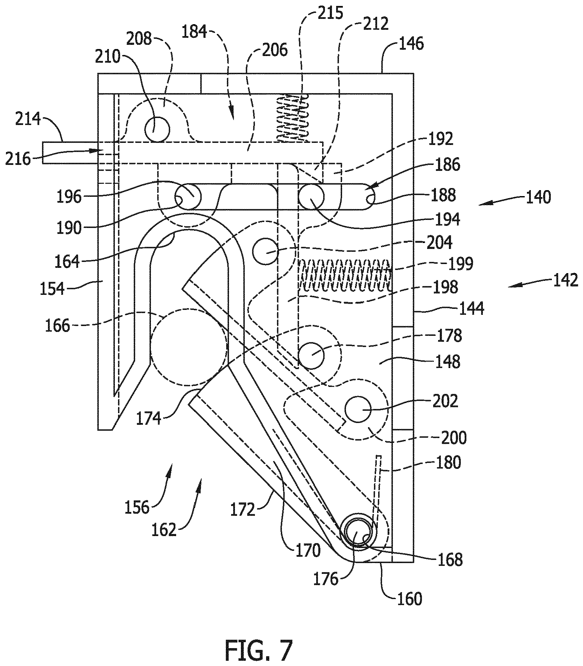

Figures 7-9 represent a further configuration of a self-releasing ceiling support latch 140. The construction of the latch 140 represented in Figures 7-9 is very similar to that of the latch 10 represented in Figures 1-3 and the latch 60 represented in Figures 4-6. In view of this, the description of the latch 140 represented in Figures 7-9 will not be as detailed as that of the latch 10 represented in Figure 1-3 and the latch 60 represented in Figures 4-6. It should be understood that many of the features of the latch 10 described with reference to Figures 1-3 and the latch 60 described with reference to Figures 4-6 are also included in the construction of the latch 140 represented In Figures 7-9.

The latch 140 includes a housing 142 that has a rear wall 144 and a top wall 146. The rear wall 144 and/or the top wall 146 are configured to be attached to an aircraft structure.

The housing 142 has a first side flange 148 connected between the rear wall 144 and the top wall 146. The housing 142 also has a second side flange 150 connected between the rear wall 144 and the top wall 146. The first side flange 148 and the second side flange 150 are planar, are parallel, are mirror images of each other and have a space or void 152 between the two flanges.

The housing 142 has a front wall 154 that is connected between the first side flange 148 and the second side flange 150. The rear wall 144, the top wall 146, the first side flange 148, the second side flange 150 and the front wall 154 could all be formed together as one, monolithic piece of material.

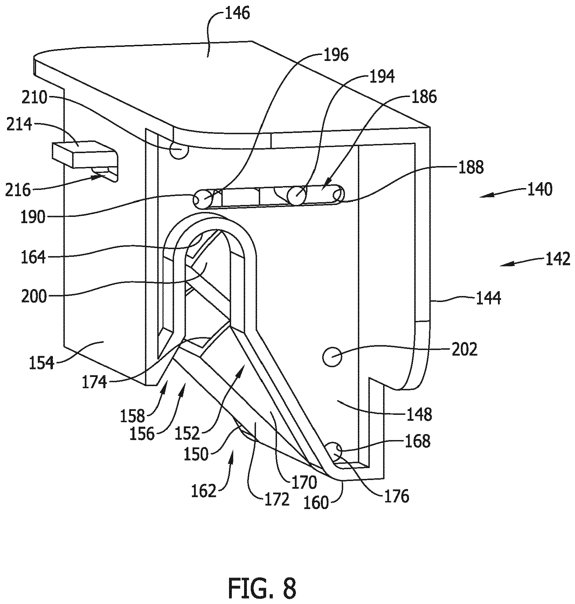

As represented in Figure 8, the first side flange 148 has a slot 156 that extends through the first side flange and the second side flange 150 has a slot 158 that extends through the second side flange. The first slot 156 and the second slot 158 have substantially the same configurations. Therefore, only the configuration of the first slot 156 is described herein.

The first slot 156 extends upwardly through a bottom edge 160 of the first side flange 148. As represented in Figures 7-9, the first slot 156 has a tapered portion 162 as it extends upwardly from the bottom edge 160 of the first side flange 148. This enables a strike of an aesthetic panel to be easily aligned with the first slot 156 as the strike is initially inserted into the first slot. The top of the tapered portion of the first slot 156 has a width dimension that is slightly larger than a cross-section dimension of the strike of the panel being inserted into the first slot. From the tapered portion of the first slot 162, the first slot 156 continues to extend upwardly to a rounded unlocking surface 164 of the first slot. The unlocking surface 164 has a general, inverted U-shaped configuration. This configuration of the unlocking surface 164 mates with the exterior configuration of the strike 166 of an aesthetic panel represented by dashed lines in Figure 7. In the example of Figure 7, the strike 166 has a circular cross-section configuration that mates with the configuration of the unlocking surface 164. If the strike 166 of the aesthetic panel had a different cross-section configuration, the unlocking surface 164 would be different to correspond with the configuration of the strike.

A pin hole 168 is provided through the first side flange 148. There is also a pin hole provided through the second side flange 150. The pin hole 168 through the first side flange 148 and the pin hole through the second side flange 150 are aligned and have substantially the same configurations. As represented in Figures 7-9, the pin hole 168 is circular.

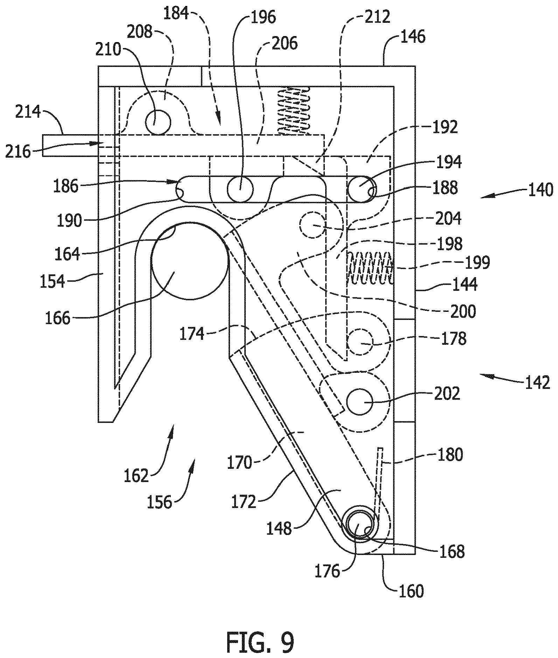

A strike hold 170 is positioned in the space or void 152 between the first side flange 148 and the second side flange 150. As represented in Figure 8, the strike hold 170 has a general U-shaped cross-section configuration. A flat, straight strike engaging surface 172 is provided at the bottom of the cross-section configuration of the strike hold 170. At the top of the strike hold 170 and on opposite sides of the strike hold are curved locking surfaces 174. Only one of the locking surfaces 174 is visible in Figures 7 and 9. It should be understood that the locking surface on the opposite side of the strike hold 170 has the same configuration as the curved locking surface 174 shown in the drawing figures. As represented in Figure 8, the strike hold 170 has a width dimension between its opposite curved locking surfaces 174 that enables the strike hold to move freely between the first flange 148 and the second flange 150.

A pin 176 is provided on the bottom of the strike hold 170. The pin extends completely across the strike hold 170 and projects from the opposite sides of the strike hold 170. The opposite ends of the pin 176 extend into the pin hole 168 in the first side flange 148 and the corresponding, aligned pin hole in the second side flange 150. The pin 176 mounts the strike hold 170 to the housing 142 for pivoting movement of the strike hold 170 about the pin 176 relative to the housing. The pin 176 enables the strike hold 170 to pivot between a locked position of the strike hold 170 relative to the housing 142 represented in Figure 7, and an unlocked position of the strike hold 170 relative to the housing 142 represented in Figure 9. In the locked position of the strike hold 170 represented in Figure 7, the curved locking surfaces 174 of the strike hold engage against the panel strike 166 represented in dashed lines in Figure 7 and lock the panel strike in the slots 156, 158. In the unlocked position of the strike hold 170 represented in Figure 9, the strike hold is displaced from the slots 156, 158 enabling the panel strike 166 to be removed from the slots.

A post 178 is provided inside the U-shaped configuration of the strike hold 170. The post 178 is located toward the opposite end of the curved locking surfaces 174 of the strike hold from the strike engaging surface 172. The post 178 extends completely across the U-shaped configuration of the strike hold 170 and is connected between the opposite portions of the strike hold having the curved locking surfaces 174.

A torsion spring 180 is positioned on the strike hold pin 176. The opposite ends of the torsion spring 180 engage against the rear wall 144 of the housing 142 and the interior surface of the strike hold strike engaging surface 172. The spring 180 biases the strike hold 170 about the strike hold pin 176 toward its locked position relative to the housing 142 represented in Figure 7.

A strike hold release/reset device 184 is provided on the housing 142. The strike hold release/reset device 184 is automatically operable to hold the strike hold 170 in the unlocked position of the strike hold in the first 156 and second 158 slots in response to the strike hold 170 being manually moved to the unlocked position represented in Figure 9, and the strike hold release/reset device 184 is manually operable to release the strike hold 170 from the unlocked position to allow the strike hold to move to the locked position represented in Figure 7. The strike hold release/reset device 184 is also manually operable to reset the strike hold 170 in the locked position in the first 156 and second 158 slots in response to manual manipulation of the strike hold release/reset device 184.

The device 184 includes a device hole 186 through the first side flange 148 and a like device hole through the second side flange 150.The device hole 186 through the first side flange 148 and the device hole through the second side flange 150 have the same configurations and are oblong as shown in Figures 7-9. The device hole 186 through the first side flange 148 and the device hole through the second side flange 150 have the same constructions and are aligned with each other on opposite sides of the space or void 152 between the first side flange 148 and the second side flange 150. Therefore, only the construction of the device hole 186 in the first side flange 148 is described. As represented in Figures 7-9, the device hole 186 is horizontally oriented and has an oblong length between a rear surface 188 of the device hole to the right in Figures 7-9, and a front surface 190 of the device hole to the left in Figures 7-9.

The strike hold release/reset device 184 also includes a base 192 that is mounted in the release device holes 186 by a pair of pins 194, 196. The base 192 is positioned in the space or void 152 between the first flange 148 and the second flange 150. The pair of pins 194, 196 project from opposite sides of the base 192 and into the device holes 186 in the first side flange 148 and the second side flange 150. The pins 194, 196 mount the base 192 for horizontal, linear reciprocating movement between a locked position of the base 192 represented in Figure 7 where the pin 196 on the left hand side of the base 192 engages against the front surface 190 of the device hole 186, and an unlocked position where the pin 194 on the right side of the base 192 engages against the rear surface 188 of the device hole 186.

A bar 198 extends downwardly from the base 192. The bar 198 has a straight length that extends downwardly from the base 192 and engages with the left side of the strike hold post 178 inside the strike hold 170 as represented in Figures 7 and 9. When the base 192 is in its locked position represented in Figure 7, the bar 198 allows the strike hold 170 to move to its locked position in the first slot 156 and second slot 158. When the base 192 is moved to its unlocked position represented in Figure 9, the bar 198 engages with the strike hold post 178 and moves the strike hold 170 to its unlocked position represented in Figure 9. A spring 199 is positioned between the right hand surface of the bar 198 and the rear wall 144 of the latch 140. The spring 199 biases the bar 198 and the base 192 to the left as viewed in Figures 7-9. The spring 199 represented in Figures 7 and 9 is a coil spring, however, other equivalent types of springs could be employed.

The strike hold release/reset device 184 also includes an actuator 200. The actuator 200 is mounted by a pivot pin 202 to the housing 142. The pivot pin 202 extends through the bottom end of the actuator 200 and into pivot holes in the first flange 148 and the second flange 150. The actuator pin 202 thereby mounts the actuator 200 for pivoting movement in the space or void 152 of the housing 142. As represented in Figure 8, the actuator 200 is mounted by the actuator pin 202 inside the U-shaped cross-section of the strike hold 170. The actuator 200 also has a general U-shaped cross-section configuration that is dimensioned to fit in the U-shaped cross-section configuration of the strike hold 170. The U-shaped cross-section configuration of the actuator 200 is dimensioned large enough to receive the bar 198 inside the U-shaped configuration of the actuator.

An actuator post 204 extends across the U-shaped configuration of the actuator 200 and is secured to opposite sides of the actuator. The actuator post 204 is positioned on the actuator 200 to engage against the bar 198 when the actuator 200 is pivoted from its locked position represented in Figure 7 to its unlocked position represented in Figure 9. When the actuator 200 is moved from its locked position represented in Figure 7 to its unlocked position represented in Figure 9, the actuator post 204 engages against the bar 198 and causes the bar to move from left to right as viewed in Figures 7 and 9. This causes the base 192 to move from left to right as represented in Figures 7 and 9. The movement of the bar 198 also causes the strike hold 170 to move from its locked position represented in Figure 7 to its unlocked position represented in Figure 9.

The release/reset device 184 further includes a lock bar 206 that extends through the space or void 152 between the first flange 148 and the second flange 150. The lock bar 206 has a lobe 208 that projects upwardly from the lock bar 206. The lobe 208 has a pivot pin 210 that extends through the lobe. The pivot pin 210 extends into aligned holes in the first flange 148 and the second flange 150 mounting the lock bar 206 to the housing 142 for pivoting movement of the lock bar through the void 152 between the first flange 148 and second flange 150.

The lock bar 206 has a catch 212 that extends downwardly from a bottom surface of the lock bar. As represented in Figure 7, the bottom surface of the lock bar 206 rests on top of the top end of the release/reset device bar 198. The catch 212 on the lock bar 206 extends downwardly from the bottom surface of the lock bar to a position below the top end of the release/reset device bar 198. A spring 215 is positioned between a top surface of the lock bar 206 and the top wall 146 of the latch 140. The spring 215 represented in Figures 7 and 9 is a coil spring, however, other types of springs could be employed. The spring 215 is positioned above the catch 212 of the lock bar 206 and biases the catch downwardly.

A handle 214 is provided on the opposite end of the lock bar 206 from the catch 212. The handle 214 extends through a hole 216 in the front wall 154 of the housing 142. The handle 214 is manually manipulatable outside the housing 142 to pivot the lock bar 206 inside the housing.

In use of the latch 140 of Figures 7-9, the strike 166 of an aesthetic panel such as a ceiling panel of an aircraft is manually moved upwardly through the first slot 156 and the second slot 158 from the bottom edges 160 of the flanges 148, 150. The strike hold 170 is initially in its locked position represented in Figure 7. The strike 166 represented in dashed lines in Figure 7 is moved upwardly through the first slot 156 and the second slot 158 until it is adjacent the strike engaging surface 172 of the strike hold 170. The strike 166 is continued to be moved upwardly, engaging the strike engaging surface 172 of the strike hold 170 and pivoting the strike hold 170 to the right as viewed in Figure 7 against the bias of the torsion spring 180. The strike 166 is continued to be moved upwardly until the strike moves past the curved locking surfaces 174 of the strike hold 170. At this point, the torsion spring 180 moves the strike hold 170 to the left as viewed in Figure 7. This causes the curved locking surfaces 174 of the strike hold 170 to move beneath the strike 166 as represented in Figure 7. In this position of the strike hold 170 the strike 166 is locked to the latch 140. This locks the panel and the strike 166 of the panel to the latch 140.

To remove the panel and the strike 166 of the panel from the latch 140, a manual force is exerted on the panel causing the strike 166 to move upwardly in the slots 156, 158 from its position represented in dashed lines in Figure 7. The strike 166 is continued to be moved upwardly until it comes into engagement with the actuator 200. The strike 166 is continued to be moved upwardly and into engagement with the unlocking surfaces 164 of the first slot 156 and the second slot 158. This causes the actuator 200 to pivot to the right about the actuator pin 202 to its position represented in Figure 9. This also causes the actuator post 204 to engage against the release/reset device bar 198 and move the bar 198 and the base 192 of the release/reset device to move to the right to their positions shown in Figure 9. This movement of the bar 198 to the right causes the bar to engage with the strike hold post 178 and move the strike hold 170 to the right to its position represented in Figure 9.

As the pivoting movement of the actuator 200 continues, the actuator post 204 continues to push the release/reset device bar 198 to the right as viewed in Figures 7 and 9. The release/reset device bar 198 continued movement to the right compresses the spring 199 and causes the catch 212 on the lock bar 206 to slide over the top end of the release/reset device bar 198 to its position represented in Figure 9. The spring 215 above the right end of the lock bar 206 then causes the catch 212 to move downwardly and engage with the left side of the top end of the release/reset device bar 198 as represented in Figure 9. The catch 212 engaging against the left side of the release/reset device bar 198 locks the strike hold 170 in its unlock position represented in Figure 9. This enables the strike 166 to be removed from the slots 156, 158. In this manner, the panel and the strike 166 are removed from the latch 140 without the use of any tools or release mechanisms.

To reset the strike hold 170 in its locked position represented in Figure 7, the handle 214 of the lock bar 206 is manually manipulated downwardly. This causes the catch 212 of the lock bar 206 to move upwardly and out of engagement with the top of the release/reset device bar 198. This movement also compresses the spring 215 above the catch 212. The torsion spring 180 then pushes the strike hold 170 to its locked position represented in Figure 7. This in turn causes the compressed spring 199 and the post 178 inside the strike hold 170 to push against the release/reset device bar 198, moving the bar to the left. The top end of the bar 198 is moved beneath the raised lock bar catch 212 and the bar 198 of the release/reset device 184 is pushed by the strike hold post 178 to its position represented in Figure 7. The handle 214 of the lock bar 206 is then released and the catch 212 of the lock bar 206 is moved downwardly by the compressed spring 215 to its position on the right side of the bar 198 of the release/reset device represented in Figure 7. The latch 140 is now in its reset condition to receive and lock a strike of a panel inserted into the first slot 156 and the second slot 158 of the latch 140.

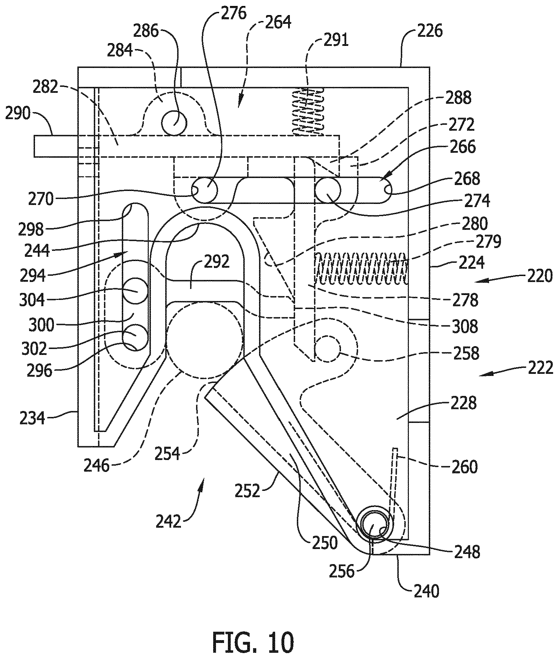

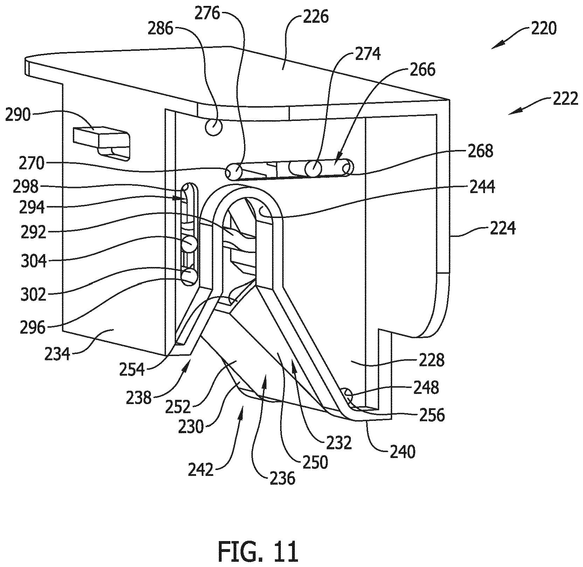

Figures 10-12 represent a still further configuration of a self-releasing ceiling support latch 220. The construction of the latch 220 represented in Figures 10-12 is very similar to and employs the same component parts of the latch 140 represented in Figures 7-9. In view of this, the description of the latch 220 represented in Figures 10-12 will not be as detailed as that of the latch 140 represented in Figures 7-9. It should be understood that many of the features of the latch 140 described with reference to Figures 7-9 are also included in the construction of the latch 220 represented in Figures 10-12.

The latch 220 includes a housing 222 that has the same construction as the housing 142 of the latch 140 of Figures 7-9. The housing 222 includes a rear wall 224 and a top wall 226, a first flange 228 and a second flange 230, a space 232 between the first flange 228 and the second flange 230 and a front wall 234. A first slot 236 and the second slot 238 are provided in the respective first flange 228 and second flange 230. The first flange 228 and the second flange 230 have the same constructions. Therefore, only the first flange construction is described. The first flange 228 has a bottom edge 240 and the first slot 236 has a tapered portion 242 that extends through the bottom edge 240 of the first flange 228. The first slot 236 extends upwardly to an unlocking surface 244 in the first flange 228. The top portion of the first slot 236 is dimensioned to receive a strike hold of an aesthetic panel represented in dashed lines 246 in Figure 10. A pin hole 248 extends through the first flange 228 and the second flange 230.

All of the component parts of the housing 222 of the latch 220 represented in Figures 10-12 have substantially the same constructions described earlier with reference to the component parts of the housing 142 of the latch 140 represented in Figures 7-9.

The latch 220 of Figures 10-12 also has a strike hold 250 that has substantially the same construction as the strike hold 170 described with reference to Figures 7-9. Therefore, the component parts of the strike hold 250 of Figures 10-12 will not again be described. It should be understood that the strike hold 250 has component parts having the same configurations of the strike hold 170 described earlier with reference to the latch 140 of Figures 7-9. These include the strike hold 250 having a strike engaging surface 252, curved locking surfaces 254, a strike hold pin 256, a strike hold post 258 and a torsion spring 260.

The latch 220 of Figures 10-12 also includes a release/reset device 264 that has substantially the same construction as the release/reset device 184 represented in Figures 7-9. In view of this, the release/reset device 264 of the latch 220 represented in Figures 10-12 will not be described in detail. It should be understood that the release/reset device 264 represented in Figures 10-12 has component parts having the same configurations as the component parts of the release/reset device 184 described earlier with reference to Figures 7-9.

The release/reset device 264 of the latch 220 of Figures 10-12 includes a device hole 266 in the housing 222 of the latch 220, the device hole 266 has a right end surface 268 and a left end surface 170 as represented in Figures 10-12.

The release/reset device 264 also includes a base 272 with the base having a right hand pin 274 and a left hand pin 276. The pins 274, 276 engage in the device hole 266 and mount the base 272 to the housing 222 for linear, horizontal reciprocating movements of the base relative to the housing.

A bar 278 extends downwardly from the base 272 of the release/reset device 264. A spring 279 is positioned between the right side of the bar 278 and the rear wall 224 of the latch 220. The spring 279 biases the bar 278 to the left as viewed in Figures 10-12. The bar 278 has a different configuration from the bar 198 of the latch 140 of Figures 7-9 in that it has an inclined surface 280 on the left side of the bar as represented in Figures 10-12. The inclined surface 280 of the bar 278 is angled to the left as the surface 280 extends upwardly as represented in Figures 10-12. The inclusion of the incline surface 280 on the bar 278 is the only difference from the bar 198 of the latch 140 represented in Figures 7-9.

The latch 220 represented in Figures 10-12 also includes a lock bar having substantially the same configuration as the lock bar 206 of the latch 140 represented in Figures 7-9. The lock bar 282 of the latch 220 represented in Figures 10-12 also has a lobe 284, a pivot pin 286 through the lobe 284, a catch 288 at one end of the lock bar 282 and a handle 290 at the opposite end of the lock bar. A spring 291 is positioned between the top of the lock bar 282 and the top wall 226 of the latch 220. The spring 291 biases the catch 288 of the lock bar 206 downwardly.

The latch 220 represented in Figures 10-12 differs in construction from the latch 140 represented in Figures 7-9 in the configuration of an actuator 292. The actuator 292 includes an oblong actuator hole 294 that extends horizontally through the first flange 282 and the second flange 230. The actuator holes 294 through the first flange 282 and the second flange 230 are aligned, parallel, and have the same configurations. Therefore, only the actuator hole 294 through the first flange 282 is described herein. The actuator hole 294 extends between a bottom end surface 296 and a top end surface 298 of the actuator hole 294.

The actuator 292 has a base 300 that is mounted in the space 232 between the first flange 228 and the second flange 230. The base 300 is dimensioned to easily slide through the space 232. A first, bottom pin 302 and a second, top pin 304 extend through the base. Opposite ends of the pins 302, 304 extend into the actuator hole 294 in the first flange 228 and the actuator hole in the second flange 230. The pins 302, 304 mount the base 300 to the housing 222 for linear, vertical reciprocating movements upwardly and downwardly through the actuator holes 294.

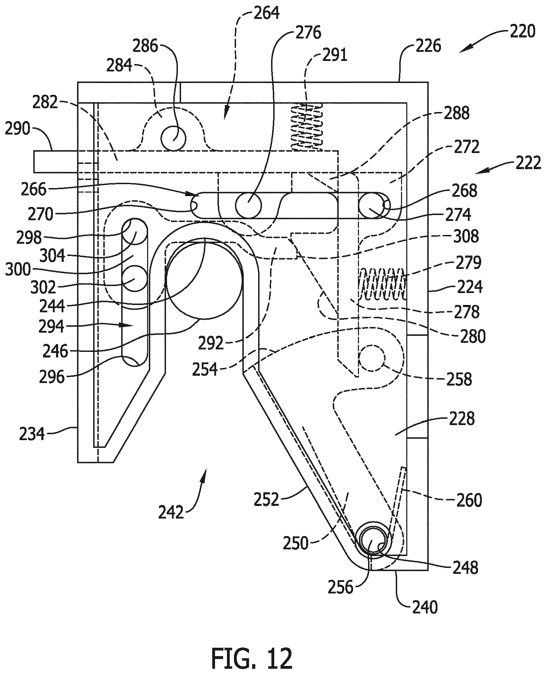

An arm 306 extends from the base 300 to the right as represented in Figures 10-12. The arm 306 extends across the first slot 236 and the second slot 238 of the housing 222 to a distal end surface 308 of the arm. The arm distal end surface 308 engages in sliding contact with the inclined surface 280 of the bar 278 of the release/reset device 264. In response to the base 300 moving upwardly and downwardly in the space 232 of the housing 222, the arm 306 moves between a locked position of the arm represented in Figure 10 where the strike hold 170 is in its locked position, and an unlocked position of the arm represented in Figure 12 where the strike hold is in its unlocked position.

In use of the latch 220 of Figures 10-12, the strike 246 of an aesthetic panel such as a ceiling panel of an aircraft is manually moved upwardly through the first slot 236 and the second slot 238 from the bottom edges 240 of the flanges 228, 230. The strike hold 250 is initially in its locked position represented in Figure 10. The strike 246 represented in dashed lines in Figure 10 is moved upwardly through the first slot 236 and the second slot 238 until it is adjacent the strike engaging surface 252 of the strike hold 250. The strike 246 is continued to be moved upwardly, engaging the strike engaging surface 252 of the strike hold 250 and pivoting the strike hold 250 to the right as viewed in Figure 10 against the bias of the torsion spring 260. The strike 246 is continued to be moved upwardly until the strike moves past the curved locking surfaces 254 of the strike hold 250. At this point, the torsion spring 260 moves the strike hold 250 to the left as viewed in Figure 10. This causes the curved locking surfaces 254 of the strike hold 250 to move beneath the strike 246 as represented in Figure 10. In this position of the strike hold 250 the strike 246 is locked to the latch 220. This locks the panel and the strike 246 of the panel to the latch 220.

To remove the panel and the strike 246 of the panel from the latch 220, a manual force is exerted on the panel causing the strike 246 to move upwardly in the slots 236, 238 from its position represented in dashed lines in Figure 10. The strike 246 is continued to be moved upwardly until it comes into engagement with the arm 306 of the actuator 292. The strike 246 is continued to be moved upwardly and into engagement with the unlocking surfaces 244 of the first slot 236 and the second slot 238. This upward movement of the strike 246 causes the strike to engage with the actuator arm 306 and push the actuator arm upwardly. As the actuator arm 306 moves upwardly, the base 300 of the actuator 292 moves upwardly until the top pin 304 of the base 300 engages with the top end surface 298 of the actuator hole 294. This upward movement of the arm 306 also causes the arm distal end surface 308 to move upwardly and slide across the inclined surface 280 of the bar 278 of the release/reset device 264. The upward movement of the actuator arm distal end surface 308 across the inclined surface 280 of the release/reset device bar 278 pushes the bar to the right as viewed in Figures 10-12. The movement of the release/reset device bar 278 to the right causes the pins 274, 276 of the base 272 to slide through the release/reset device hole 266 and compresses the spring 279. The movement of the release/reset device bar 278 to the right also causes the bar 278 to engage with the strike hold post 258 and move the strike hold 250 to the right to its position represented in Figure 12.

As the upward movement of the actuator 292 continues, the arm distal end surface 308 continues to slide over the bar inclined surface 280 and push the release/reset device bar 278 to the right as viewed in Figures 10 and 12. The continued movement of the release/reset device bar 278 to the right causes the catch 288 on the lock bar 282 to slide over the top end of the release/reset device bar 278, compressing the spring 291, to its position represented in Figure 12. The compressed spring 291 above the right end of the lock bar 282 then causes the catch 288 to move downwardly and engage with the left side of the top end of the release/reset device bar 278 as represented in Figure 12. The catch 288 engaging against the left side of the release/reset device bar 278 locks the strike hold 250 in its unlocked position represented in Figure 12. This enables the strike 246 to be removed from the slots 236, 238. In this manner, the panel and the strike 246 of the panel are removed from the latch 220 without the use of any tools or release mechanisms.

To reset the strike hold 250 in its locked position represented in Figure 10, the handle 290 of the lock bar 282 is manually moved downwardly, causing the right end of the lock bar 282 to move upwardly and compress the spring 291. This also causes the catch 288 of the lock bar 282 to move upwardly and out of engagement with the top of the release/reset device bar 278. The torsion spring 260 of the strike hold 250 then pushes the strike hold to its locked position represented in Figure 10. This in turn causes the post 258 inside the strike hold 250 and the compressed spring 279 to push against the release/reset device bar 278, moving the bar to the left. The top end of the release/reset device bar 278 is moved beneath the raised lock bar catch 288 and the release/reset device bar 278 is pushed by the strike hold post 258 and the spring 279 to its position represented in Figure 10. The handle 290 of the lock bar 282 is then released and the compressed spring 291 above the right side end of the lock bar causes the catch 288 of the lock bar to move downwardly to its position on the right side of the top of the release/reset device bar 278 as represented in Figure 10. The latch 220 is now in its reset condition to receive and lock a strike of a panel inserted into the first slot 236 and the second slot 238 of the latch 220.

As various modifications could be made in the construction of the apparatus and its method of operation herein described and illustrated without departing from the scope of the invention as defined by the appended claims, it is intended that all matter contained in the foregoing description or shown in the accompanying drawings shall be interpreted as illustrative rather than limiting. Thus, the breadth and scope of the present disclosure should not be limited by any of the above described exemplary embodiments, but should be defined only in accordance with the following claims appended hereto.

## Claims

1. An aircraft interior panel latch that releasably supports a panel of an aircraft interior, the latch comprising:
a housing (12, 62, 142, 222) having first and second side flanges (148, 150, 228, 230) that substantially are mirror images of each other;
a space (232) between the first and second side flanges (148, 150, 228, 230);
first and second slots (26, 28, 76, 78, 156, 158, 236, 238) having substantially the same configurations and extending from a bottom edge (30, 80, 160, 240) of the respective first and second side flanges (148, 150, 228, 230) into the respective first and second side flanges (148, 150, 228, 230), the first and second slots (26, 28, 76, 78, 156, 158, 236, 238) being configured to receive a panel strike (34, 84, 166) that has been manually positioned in the first and second slots (26, 28, 76, 78, 156, 158, 236, 238); and
a strike hold (22, 42, 92, 170, 250) in the space (232) between the first and second side flanges (148, 150, 228, 230), the strike hold (22, 42, 92, 170, 250) being moveable in the space (232) between a locked position of the strike hold (22, 42, 92, 170, 250) in the first and second slots (26, 28, 76, 78, 156, 158, 236, 238) and an unlocked position of the strike hold (22, 42, 92, 170, 250) in the first and second slots (26, 28, 76, 78, 156, 158, 236, 238) wherein the strike hold (22, 42, 92, 170, 250) is configured to be moved to the locked position of the strike hold (22, 42, 92, 170, 250) in the first and second slots (26, 28, 76, 78, 156, 158, 236, 238) in response to a panel strike (34, 84, 166) being manually moved into the first and second slots (26, 28, 76, 78, 156, 158, 236, 238) upwardly relatively to the bottom edge (30, 80, 160, 240) and manually released in the first and second slots (26, 28, 76, 78, 156, 158, 236, 238), and the strike hold (22, 42, 92, 170, 250) is configured to be moved to the unlocked position of the strike hold (22, 42, 92, 170, 250) in the first and second slots (26, 28, 76, 78, 156, 158, 236, 238) in response to a panel strike (34, 84, 166) in the first and second slots (26, 28, 76, 78, 156, 158, 236, 238) being manually moved upwardly relatively to the bottom edge (30, 80, 160, 240) in the first and second slots (26, 28, 76, 78, 156, 158, 236, 238) by further manual movement of the panel strike into the slots.

2. The latch of claim 1, further comprising:
a spring (54, 56, 106, 130, 132, 180, 199, 215, 279, 291) in the space (232) between the first side flange and the second side flange, the spring (54, 56, 106, 130, 132, 180, 199, 215, 279, 291) being operatively connected with the strike hold (22, 42, 92, 170, 250) and biasing the strike hold (22, 42, 92, 170, 250) toward the locked position of the strike hold (22, 42, 92, 170, 250) in the first and second slots (26, 28, 76, 78, 156, 158, 236, 238).

3. The latch of claim 1 or 2, further comprising:
first and second pin holes in the respective first and second side flanges (148, 150, 228, 230); and
a pin on the strike hold (22, 42, 92, 170, 250), the pin extending into the first and second pin holes in the respective first and second side flanges (148, 150, 228, 230).

4. The latch of claim 3, further comprising:
the first and second pin holes in the respective first and second side flanges (148, 150, 228, 230) being oblong; and
the pin on the strike hold (22, 42, 92, 170, 250) extending into the first and second pin holes being configured for translatory reciprocating movements through the first and second pin holes, preferably further comprising:
the pin being a first pin of a pair of pins on the strike hold (22, 42, 92, 170, 250); and
the pair of pins extending into the first and second pin holes of the respective first and second side flanges (148, 150, 228, 230).

5. The latch of claim 3, further comprising:
the first and second pin holes in the respective first and second side flanges (148, 150, 228, 230) being circular; and
the pin on the strike hold (22, 42, 92, 170, 250) extending into the first and second pin holes being configured for rotating movements in opposite directions in the first and second pin holes of the respective first and second side flanges (148, 150, 228, 230).

6. The latch of any of the preceding claims, further comprising:
the first and second slots (26, 28, 76, 78, 156, 158, 236, 238) being configured to receive a strike of an aircraft ceiling panel in the first and second slots (26, 28, 76, 78, 156, 158, 236, 238).

7. The latch of any of the preceding claims further comprising:
the first and second side flanges (148, 150, 228, 230) having respective first and second bottom edges; and,
the first and second slots (26, 28, 76, 78, 156, 158, 236, 238) extend vertically upwardly from the respective first and second bottom edges of the respective first and second side flanges (148, 150, 228, 230), preferably
further comprising:
the first and second slots (26, 28, 76, 78, 156, 158, 236, 238) in the respective first and second side flanges (148, 150, 228, 230) extending vertically upwardly from the respective first and second bottom edges and into the respective first and second side flanges (148, 150, 228, 230); and,
the first and second slots (26, 28, 76, 78, 156, 158, 236, 238) then extending horizontally through the respective first and second side flanges (148, 150, 228, 230).

8. The latch of any of the preceding claims, further comprising:
a strike hold (22, 42, 92, 170, 250) release/reset device (108, 184, 264) on the housing (12, 62, 142, 222), the strike hold (22, 42, 92, 170, 250) release/reset device (108, 184, 264) being automatically operable to hold the strike hold (22, 42, 92, 170, 250) in the unlocked position of the strike hold (22, 42, 92, 170, 250) in the first and second slots (26, 28, 76, 78, 156, 158, 236, 238) in response to a panel strike (34, 84, 166) being manually moved into the first and second slots (26, 28, 76, 78, 156, 158, 236, 238) and the strike hold (22, 42, 92, 170, 250) release/reset device (108, 184, 264) being manually operable to release the strike hold (22, 42, 92, 170, 250) from the unlocked position in the first and second slots (26, 28, 76, 78, 156, 158, 236, 238) and reset the strike hold (22, 42, 92, 170, 250) in the locked position in the first and second slots (26, 28, 76, 78, 156, 158, 236, 238) in response to manual manipulation of the strike hold (22, 42, 92, 170, 250) release/reset device (108, 184, 264).

9. A latch according to any of the preceding claims, that releasably supports a flange, the latch comprising:
a housing (12, 62, 142, 222) configured for being attached to a structure adjacent an opening that is covered by a removable panel;
a first side flange on the housing (12, 62, 142, 222);
a second side flange on the housing (12, 62, 142, 222), the first side flange and the second side flange being parallel with there being a space (232) between the first side flange and the second side flange;
the first side flange having a first bottom edge;
the second side flange having a second bottom edge;
the first side flange having a first slot extending upwardly through the first bottom edge of the first side flange and into the first side flange;
the second side flange having a second slot extending upwardly through the second bottom edge of the second side flange and into the second side flange;
the first side flange having a first pin hole in the first side flange;
the second side flange having a second pin hole in the second side flange;
a strike hold (22, 42, 92, 170, 250) in the space (232) between the first side flange and the second side flange, the strike hold (22, 42, 92, 170, 250) being moveable in the space (232) between a locked position of the strike hold (22, 42, 92, 170, 250) in the first slot and the second slot and an unlocked position of the strike hold (22, 42, 92, 170, 250) in the first slot and the second slot where the locked position of the strike hold (22, 42, 92, 170, 250) in the first slot and the second slot is below the unlocked position of the strike hold (22, 42, 92, 170, 250) in the first slot and the second slot;
a pin on the strike hold (22, 42, 92, 170, 250), the pin extending into the first pin hole in the first side flange and the pin extending into the second pin hole in the second side flange; and
a spring (54, 56, 106, 130, 132, 180, 199, 215, 279, 291) in the space (232) between the first side flange and the second side flange, the spring (54, 56, 106, 130, 132, 180, 199, 215, 279, 291) being operatively connected with the strike hold (22, 42, 92, 170, 250) and biasing the strike hold (22, 42, 92, 170, 250) toward the locked position of the strike hold (22, 42, 92, 170, 250) in the first slot and the second slot.

10. The latch of claim 9, further comprising:
the first pin hole in the first side flange being oblong or circular;
the second pin hole in the second side flange being oblong or circular; and
the pin being configured for linear, reciprocating movements through the first pin hole in the first side flange and the second pin hole in the second side flange, when the pin holes are oblong,
or the pin being configured for rotating movements in opposite directions in the first pin hole in the first side flange and the second pin hole in the second side flange when the pin holes are circular.

11. The latch of claim 10, further comprising:
the pin being one pin of a pair of pins on the strike hold (22, 42, 92, 170, 250); and
the pair of pins on the strike hold (22, 42, 92, 170, 250) extend into the first pin hole in the first side flange and the pair of pins on the strike hold (22, 42, 92, 170, 250) extend into the second pin hole in the second side flange.

12. The latch of any of the claims 9-11, further comprising:
the first slot in the first side flange and the second slot in the second side flange being configured for receiving a strike of an aircraft ceiling panel in the first slot and the second slot; and
the strike hold (22, 42, 92, 170, 250) being moveable from the locked position to the unlocked position of the strike hold in the first slot and the second slot in response to the strike moving upwardly in the first slot and the second slot by the aircraft ceiling panel being manually moved upwardly, and/or further comprising:
the first slot in the first side flange extending vertically upwardly from the first bottom edge of the first side flange and into the first side flange; and
the second slot in the second side flange extending vertically upwardly from the second bottom edge of the second side flange and into the second side flange.

13. The latch of any of the claims 9-12, further comprising:
the first slot in the first side flange extending vertically upwardly from the first bottom edge of the first side flange and into the first side flange, and then the first slot in the first side flange extending horizontally through the first side flange; and
the second slot in the second side flange extending vertically upwardly from the second bottom edge of the second side flange and into the second side flange, and then the second slot in the second side flange extending horizontally through the second side flange.

14. The latch of any of the claims 9-13, further comprising: a strike hold (22, 42, 92, 170, 250) release/reset device (108, 184, 264) on the housing (12, 62, 142, 222), the strike hold (22, 42, 92, 170, 250) release/reset device (108, 184, 264) being automatically operable to hold the strike hold (22, 42, 92, 170, 250) in the unlocked position of the strike hold (22, 42, 92, 170, 250) in the first and second slots (26, 28, 76, 78, 156, 158, 236, 238) in response to a panel strike (34, 84, 166) being manually moved into the first and second slots (26, 28, 76, 78, 156, 158, 236, 238), and the strike hold (22, 42, 92, 170, 250) release/reset device (108, 184, 264) being manually operable to release the strike hold (22, 42, 92, 170, 250) from the unlocked position and being manually operable to reset the strike hold ( 22, 42, 92, 170, 250) in the locked position of the strike hold (22, 42, 92, 170, 250) in the first and second slots (26, 28, 76, 78, 156, 158, 236, 238) in response to manual manipulation of the strike hold (22, 42, 92, 170, 250) release/reset device (108, 184, 264).

15. A method of releasably attaching a panel over a panel opening utilizing a latch according to any of the preceding claims, comprising
attaching the panel over the panel opening by manually inserting a panel strike (34, 84, 166) on the panel into a slot of a latch that is operable to removably attach the panel connected to the panel strike (34, 84, 166) over an opening adjacent the latch;
moving a strike hold (22, 42, 92, 170, 250) on the latch from a locked position in the slot to an unlocked position in the slot in response to the manually inserting of the panel strike (34, 84, 166) into the slot;
manually releasing the panel strike (34, 84, 166) in the slot; and,
biasing the strike hold (22, 42, 92, 170, 250) from the unlocked position in the slot to the locked position in the slot, thereby attaching the panel over the panel opening, preferably further comprising:
removing the panel from over the panel opening by manually moving the panel strike (34, 84, 166) upwardly in the slot of the latch and thereby moving the strike hold (22, 42, 92, 170, 250) from the locked position of the strike hold (22, 42, 92, 170, 250) in the slot to the unlocked position of the strike hold in the slot, thereby enabling the panel strike to be removed from the slot and the panel to be removed from over the panel opening.

## Patentansprüche

1. Verriegelung für eine Flugzeuginnenraumverkleidungsplatte, die lösbar eine Platte eines Flugzeuginnenraums trägt, wobei die Verriegelung umfasst:
ein Gehäuse (12, 62, 142, 222) mit ersten und zweiten Seitenflanschen (148, 150, 228, 230), die im Wesentlichen Spiegelbilder voneinander sind;
einen Zwischenraum (232) zwischen dem ersten und dem zweiten Seitenflansch (148, 150, 228, 230);
erste und zweite Schlitze (26, 28, 76, 78, 156, 158, 236, 238), die im Wesentlichen dieselbe Konfiguration aufweisen und sich von einer unteren Kante (30, 80, 160, 240) der jeweiligen ersten und zweiten Seitenflansche (148, 150, 228, 230) in die jeweiligen ersten und zweiten Seitenflansche (148, 150, 228, 230) erstrecken, wobei die ersten und zweiten Schlitze (26, 28, 76, 78, 156, 158, 236, 238) dazu konfiguriert sind, einen Plattenbolzen (34, 84, 166), der manuell in die ersten und zweiten Schlitze (26, 28, 76, 78, 156, 158, 236, 238) positioniert wurde, aufzunehmen; und
eine Bolzenarretierung (22, 42, 92, 170, 250) in dem Zwischenraum (232) zwischen dem ersten und dem zweiten Seitenflansch (148, 150, 228, 230), wobei die Bolzenarretierung (22, 42, 92, 170, 250) in dem Zwischenraum (232) zwischen einer verriegelten Position der Bolzenarretierung (22, 42, 92, 170, 250) in den ersten und zweiten Schlitzen (26, 28, 76, 78, 156, 158, 236, 238) und einer entriegelten Position der Bolzenarretierung (22, 42, 92, 170, 250) in den ersten und zweiten Schlitzen (26, 28, 76, 78, 156, 158, 236, 238) bewegt werden kann, wobei die Bolzenarretierung (22, 42, 92, 170, 250) dazu konfiguriert ist, in die verriegelte Position der Bolzenarretierung (22, 42, 92, 170, 250) in den ersten und zweiten Schlitzen (26, 28, 76, 78, 156, 158, 236, 238) bewegt zu werden als Reaktion darauf, dass ein Plattenbolzen (34, 84, 166) manuell in die ersten und zweiten Schlitze (26, 28, 76, 78, 156, 158, 236, 238) nach oben in Bezug auf die untere Kante (30, 80, 160, 240) bewegt wird und manuell in den ersten und zweiten Schlitzen (26, 28, 76, 78, 156, 158, 236, 238) gelöst wird, und wobei die Bolzenarretierung (22, 42, 92, 170, 250) dazu konfiguriert ist, in die entriegelte Position der Bolzenarretierung (22, 42, 92, 170, 250) in den ersten und zweiten Schlitzen (26, 28, 76, 78, 156, 158, 236, 238) bewegt zu werden als Reaktion darauf, dass ein Plattenbolzen (34, 84, 166) in den ersten und zweiten Schlitzen (26, 28, 76, 78, 156, 158, 236, 238) manuell nach oben in Bezug auf die untere Kante (30, 80, 160, 240) in den ersten und zweiten Schlitzen (26, 28, 76, 78, 156, 158, 236, 238) bewegt wird durch ein weiteres manuelles Bewegen des Plattenbolzens in die Schlitze.

2. Verriegelung nach Anspruch 1, die weiterhin umfasst:
eine Feder (54, 56, 106, 130, 132, 180, 199, 215, 279, 291) in dem Zwischenraum (232) zwischen dem ersten Seitenflansch und dem zweiten Seitenflansch, wobei die Feder (54, 56, 106, 130, 132, 180, 199, 215, 279, 291) mit der Bolzenarretierung (22, 42, 92, 170, 250) wirkverbunden ist und die Bolzenarretierung (22, 42, 92, 170, 250) in Richtung der verriegelten Position der Bolzenarretierung (22, 42, 92, 170, 250) in den ersten und zweiten Schlitzen (26, 28, 76, 78, 156, 158, 236, 238) vorspannt.

3. Verriegelung nach Anspruch 1 oder 2, die weiterhin umfasst:
erste und zweite Stiftlöcher in den jeweiligen ersten und zweiten Seitenflanschen (148, 150, 228, 230); und
einen Stift an der Bolzenarretierung (22, 42, 92, 170, 250), wobei der Stift sich in die ersten und zweiten Stiftlöcher in den jeweiligen ersten und zweiten Seitenflanschen (148, 150, 228, 230) erstreckt.

4. Verriegelung nach Anspruch 3, wobei weiterhin:
die ersten und zweiten Stiftlöcher in den jeweiligen ersten und zweiten Seitenflanschen (148, 150, 228, 230) länglich sind; und
der Stift an der Bolzenarretierung (22, 42, 92, 170, 250), der sich in die ersten und zweiten Stiftlöcher erstreckt, für verschiebende Hin-und-Her-Bewegungen durch die ersten und zweiten Stiftlöcher konfiguriert ist, wobei weiterhin vorzugsweise:
der Stift ein erster Stift aus einem Paar von Stiften an der Bolzenarretierung (22, 42, 92, 170, 250) ist; und
das Paar von Stiften sich in die ersten und zweiten Stiftlöcher in den jeweiligen ersten und zweiten Seitenflanschen (148, 150, 228, 230) erstreckt.

5. Verriegelung nach Anspruch 3, wobei weiterhin:
die ersten und zweiten Stiftlöcher in den jeweiligen ersten und zweiten Seitenflanschen (148, 150, 228, 230) rund sind; und
der Stift an der Bolzenarretierung (22, 42, 92, 170, 250), der sich in die ersten und zweiten Stiftlöcher erstreckt, für drehende Bewegungen in entgegengesetzte Richtungen in den ersten und zweiten Stiftlöchern der jeweiligen ersten und zweiten Seitenflansche (148, 150, 228, 230) konfiguriert ist.

6. Verriegelung nach einem der vorstehenden Ansprüche, wobei weiterhin:
die ersten und zweiten Schlitze (26, 28, 76, 78, 156, 158, 236, 238) dazu konfiguriert sind, einen Plattenbolzen einer Flugzeugdeckenverkleidungsplatte in den ersten und zweiten Schlitzen (26, 28, 76, 78, 156, 158, 236, 238) aufzunehmen.

7. Verriegelung nach einem der vorstehenden Ansprüche, wobei weiterhin:
die ersten und zweiten Seitenflansche (148, 150, 228, 230) jeweilige erste und zweite untere Kanten aufweisen; und
die ersten und zweiten Schlitze (26, 28, 76, 78, 156, 158, 236, 238) sich von den jeweiligen ersten und zweiten unteren Kanten der jeweiligen ersten und zweiten Seitenflansche (148, 150, 228, 230) vertikal nach oben erstrecken, wobei vorzugsweise weiterhin:
die ersten und zweiten Schlitze (26, 28, 76, 78, 156, 158, 236, 238) in den jeweiligen ersten und zweiten Seitenflanschen (148, 150, 228, 230) sich von den jeweiligen ersten und zweiten unteren Kanten und in die jeweiligen ersten und zweiten Seitenflansche (148, 150, 228, 230) vertikal nach oben erstrecken; und
die ersten und zweiten Schlitze (26, 28, 76, 78, 156, 158, 236, 238) sich dann horizontal durch die jeweiligen ersten und zweiten Seitenflansche (148, 150, 228, 230) erstrecken.

8. Verriegelung nach einem der vorstehenden Ansprüche, die weiterhin umfasst:
eine Bolzenarretierungs- (22, 42, 92, 170, 250) Löse-/Rücksetz-Vorrichtung (108, 184, 264) an dem Gehäuse (12, 62, 142, 222), wobei die Bolzenarretierungs- (22, 42, 92, 170, 250) Löse-/Rücksetz-Vorrichtung (108, 184, 264) automatisch dazu bedient werden kann, die Bolzenarretierung (22, 42, 92, 170, 250) in der entriegelten Position der Bolzenarretierung (22, 42, 92, 170, 250) in den ersten und zweiten Schlitzen (26, 28, 76, 78, 156, 158, 236, 238) zu halten als Reaktion darauf, dass ein Plattenbolzen (34, 84, 166) manuell in die ersten und zweiten Schlitze (26, 28, 76, 78, 156, 158, 236, 238) bewegt wird, und wobei die Bolzenarretierungs- (22, 42, 92, 170, 250) Löse-/Rücksetz-Vorrichtung (108, 184, 264) manuell dazu bedient werden kann, die Bolzenarretierung (22, 42, 92, 170, 250) aus der entriegelten Position in den ersten und zweiten Schlitzen (26, 28, 76, 78, 156, 158, 236, 238) zu lösen und die Bolzenarretierung (22, 42, 92, 170, 250) in die verriegelte Position in den ersten und zweiten Schlitzen (26, 28, 76, 78, 156, 158, 236, 238) zurückzusetzen als Reaktion auf eine manuelle Betätigung der Bolzenarretierungs- (22, 42, 92, 170, 250) Löse-/Rücksetz-Vorrichtung (108, 184, 264).

9. Verriegelung nach einem der vorstehenden Ansprüche, die lösbar einen Seitenflansch hält, wobei die Verriegelung umfasst:
ein Gehäuse (12, 62, 142, 222), das dazu konfiguriert ist, an einer Struktur angrenzend zu einer von einer abnehmbaren Platte abgedeckten Öffnung befestigt zu werden;
einen ersten Seitenflansch an dem Gehäuse (12, 62, 142, 222);
einen zweiten Seitenflansch an dem Gehäuse (12, 62, 142, 222), wobei der erste und der zweite Seitenflansch parallel zueinander sind, wodurch zwischen dem ersten und dem zweiten Seitenflansch ein Zwischenraum (232) gebildet wird;
wobei der erste Seitenflansch eine erste untere Kante aufweist;
wobei der zweite Seitenflansch eine zweite untere Kante aufweist;
wobei der erste Seitenflansch einen ersten Schlitz aufweist, der sich durch die erste untere Kante des ersten Seitenflanschs nach oben und in den ersten Seitenflansch erstreckt;
wobei der zweite Seitenflansch einen zweiten Schlitz aufweist, der sich durch die zweite untere Kante des zweiten Seitenflanschs nach oben und in den zweiten Seitenflansch erstreckt;
wobei der erste Seitenflansch ein erstes Stiftloch in dem ersten Seitenflansch aufweist;
wobei der zweite Seitenflansch ein zweites Stiftloch in dem zweiten Seitenflansch aufweist;
eine Bolzenarretierung (22, 42, 92, 170, 250) in dem Zwischenraum (232) zwischen dem ersten Seitenflansch und dem zweiten Seitenflansch, wobei die Bolzenarretierung (22, 42, 92, 170, 250) in dem Zwischenraum (232) zwischen einer verriegelten Position der Bolzenarretierung (22, 42, 92, 170, 250) in dem ersten Schlitz und dem zweiten Schlitz und einer entriegelten Position der Bolzenarretierung (22, 42, 92, 170, 250) in dem ersten Schlitz und dem zweiten Schlitz bewegt werden kann, wobei die verriegelte Position der Bolzenarretierung (22, 42, 92, 170, 250) in dem ersten Schlitz und dem zweiten Schlitz sich unterhalb der entriegelten Position der Bolzenarretierung (22, 42, 92, 170, 250) in dem ersten Schlitz und dem zweiten Schlitz befindet,
einen Stift an der Bolzenarretierung (22, 42, 92, 170, 250), wobei der Stift sich in das erste Stiftloch in dem ersten Seitenflansch erstreckt und der Stift sich in das zweite Stiftloch in dem zweiten Seitenflansch erstreckt; und
eine Feder (54, 56, 106, 130, 132, 180, 199, 215, 279, 291) in dem Zwischenraum (232) zwischen dem ersten Seitenflansch und dem zweiten Seitenflansch, wobei die Feder (54, 56, 106, 130, 132, 180, 199, 215, 279, 291) mit der Bolzenarretierung (22, 42, 92, 170, 250) wirkverbunden ist und die Bolzenarretierung (22, 42, 92, 170, 250) in Richtung der verriegelten Position der Bolzenarretierung (22, 42, 92, 170, 250) in dem ersten Schlitz und dem zweiten Schlitz vorspannt.

10. Verriegelung nach Anspruch 9, wobei weiterhin:
das erste Stiftloch in dem ersten Seitenflansch länglich oder rund ist;
das zweite Stiftloch in dem zweiten Seitenflansch länglich oder rund ist; und
der Stift für lineare Hin-und-Her-Bewegungen durch das erste Stiftloch in dem ersten Seitenflansch und das zweite Stiftloch in dem zweiten Seitenflansch konfiguriert ist, wenn die Stiftlöcher länglich sind,
oder der Stift für drehende Bewegungen in entgegengesetzte Richtungen in dem ersten Stiftloch in dem ersten Seitenflansch und dem zweiten Stiftloch in dem zweiten Seitenflansch konfiguriert ist, wenn die Stiftlöcher rund sind.

11. Verriegelung nach Anspruch 10, wobei weiterhin:
der Stift ein Stift aus einem Paar von Stiften an der Bolzenarretierung (22, 42, 92, 170, 250) ist; und
das Paar von Stiften an der Bolzenarretierung (22, 42, 92, 170, 250) sich in das erste Stiftloch in dem ersten Seitenflansch erstreckt und das Paar von Stiften an der Bolzenarretierung (22, 42, 92, 170, 250) sich in das zweite Stiftloch in dem zweiten Seitenflansch erstreckt.

12. Verriegelung nach einem der Ansprüche 9 bis 11, wobei weiterhin:
der erste Schlitz in dem ersten Seitenflansch und der zweite Schlitz in dem zweiten Seitenflansch dazu konfiguriert sind, einen Plattenbolzen einer Flugzeugdeckenverkleidungsplatte in den ersten Schlitz und den zweiten Schlitz aufzunehmen; und
die Bolzenarretierung (22, 42, 92, 170, 250) aus der verriegelten Position in die entriegelte Position der Bolzenarretierung in dem ersten Schlitz und dem zweiten Schlitz bewegt werden kann als Reaktion darauf, dass der Plattenbolzen sich in dem ersten Schlitz und dem zweiten Schlitz nach oben bewegt, wenn die Flugzeugdeckenverkleidungsplatte manuell nach oben bewegt wird, und/oder wobei weiterhin:
der erste Schlitz in dem ersten Seitenflansch sich von der ersten unteren Kante des ersten Seitenflanschs vertikal nach oben und in den ersten Seitenflansch erstreckt; und
der zweite Schlitz in dem zweiten Seitenflansch sich von der zweiten unteren Kante des zweiten Seitenflanschs vertikal nach oben und in den zweiten Seitenflansch erstreckt.

13. Verriegelung nach einem der Ansprüche 9 bis 12, wobei weiterhin:
der erste Schlitz in dem ersten Seitenflansch sich von der ersten unteren Kante des ersten Seitenflanschs vertikal nach oben und in den ersten Seitenflansch erstreckt und dann der erste Schlitz in dem ersten Seitenflansch sich horizontal durch den ersten Seitenflansch erstreckt; und
der zweite Schlitz in dem zweiten Seitenflansch sich von der zweiten unteren Kante des zweiten Seitenflanschs vertikal nach oben und in den zweiten Seitenflansch erstreckt und dann der zweite Schlitz in dem zweiten Seitenflansch sich horizontal durch den zweiten Seitenflansch erstreckt.

14. Verriegelung nach einem der Ansprüche 9 bis 13, die weiterhin umfasst:
eine Bolzenarretierungs- (22, 42, 92, 170, 250) Löse-/Rücksetz-Vorrichtung (108, 184, 264) an dem Gehäuse (12, 62, 142, 222), wobei die Bolzenarretierungs- (22, 42, 92, 170, 250) Löse-/Rücksetz-Vorrichtung (108, 184, 264) automatisch dazu bedient werden kann, die Bolzenarretierung (22, 42, 92, 170, 250) in der entriegelten Position der Bolzenarretierung (22, 42, 92, 170, 250) in den ersten und zweiten Schlitzen (26, 28, 76, 78, 156, 158, 236, 238) zu halten als Reaktion darauf, dass ein Plattenbolzen (34, 84, 166) manuell in die ersten und zweiten Schlitze (26, 28, 76, 78, 156, 158, 236, 238) bewegt wird, und wobei die Bolzenarretierungs- (22, 42, 92, 170, 250) Löse-/Rücksetz-Vorrichtung (108, 184, 264) manuell dazu bedient werden kann, die Bolzenarretierung (22, 42, 92, 170, 250) aus der entriegelten Position zu lösen und manuell dazu bedient werden kann, die Bolzenarretierung (22, 42, 92, 170, 250) in die verriegelte Position der Bolzenarretierung (22, 42, 92, 170, 250) in den ersten und zweiten Schlitzen (26, 28, 76, 78, 156, 158, 236, 238) zurückzusetzen als Reaktion auf eine manuelle Betätigung der Bolzenarretierungs- (22, 42, 92, 170, 250) Löse-/Rücksetz-Vorrichtung (108, 184, 264).

15. Verfahren zum lösbaren Befestigen einer Platte über einer Plattenöffnung unter Verwendung einer Verriegelung nach einem der vorstehenden Ansprüche, wobei das Verfahren umfasst:
Befestigen der Platte über der Plattenöffnung durch manuelles Einführen eines Plattenbolzens (34, 84, 166) an der Platte in einen Schlitz einer Verriegelung, die dazu bedient werden kann, die mit dem Plattenbolzen (34, 84, 166) verbundene Platte lösbar über einer Öffnung angrenzend zu der Verriegelung zu befestigen;
Bewegen einer Bolzenarretierung (22, 42, 92, 170, 250) an der Verriegelung aus einer verriegelten Position in dem Schlitz zu einer entriegelten Position in dem Schlitz als Reaktion auf das manuelle Einführen des Plattenbolzens (34, 84, 166) in den Schlitz;
manuelles Lösen des Plattenbolzens (34, 84, 166) in dem Schlitz; und
Vorspannen der Bolzenarretierung (22, 42, 92, 170, 250) aus der entriegelten Position in dem Schlitz in die verriegelte Position in dem Schlitz, wodurch die Platte über der Plattenöffung befestigt wird, vorzugsweise weiterhin umfassend:
Entfernen der Platte von der Plattenöffnung durch manuelles Bewegen des Plattenbolzens (34, 84, 166) nach oben in dem Schlitz der Verriegelung und dadurch Bewegen der Bolzenarretierung (22, 42, 92, 170, 250) aus der verriegelten Position der Bolzenarretierung (22, 42, 92, 170, 250) in dem Schlitz zu der entriegelten Position der Bolzenarretierung in dem Schlitz, wodurch ermöglicht wird, dass der Plattenbolzen aus dem Schlitz entfernt wird und die Platte von der Plattenöffnung entfernt wird.

## Revendications

1. Verrou de panneau intérieur d'aéronef, supportant de manière détachable un panneau d'intérieur d'aéronef, le verrou comprenant :
un corps (12, 62, 142, 222) possédant des première et deuxième brides latérales (148, 150, 228, 230) qui sont sensiblement axialement symétriques ;
un espace (232) entre les première et deuxième brides latérales (148, 150, 228, 230) ;
des première et deuxième fentes (26, 28, 76, 78, 156, 158, 236, 238) ayant sensiblement la même configuration et partant du bord inférieur (30, 80, 160, 240) de la première et deuxième bride latérale (148, 150, 228, 230) respective et pénétrant dans la première et deuxième bride latérale (148, 150, 228, 230) respective, les première et deuxième fentes (26, 28, 76, 78, 156, 158, 236, 238) étant conçues pour recevoir un pêne de panneau (34, 84, 166) ayant été disposé manuellement dans les première et deuxième fentes (26, 28, 76, 78, 156, 158, 236, 238) ; et
un bloque-pêne (22, 42, 92, 170, 250) dans l'espace (232) entre les première et deuxième brides latérales (148, 150, 228, 230), le bloque-pêne (22, 42, 92, 170, 250) étant mobile dans l'espace (232) entre une position de blocage du bloque-pêne (22, 42, 92, 170, 250) dans les première et deuxième fentes (26, 28, 76, 78, 156, 158, 236, 238) et une position de déblocage du bloque-pêne (22, 42, 92, 170, 250) dans les première et deuxième fentes (26, 28, 76, 78, 156, 158, 236, 238), ledit bloque-pêne (22, 42, 92, 170, 250) étant conçu pour passer en position de blocage du bloque-pêne (22, 42, 92, 170, 250) dans les première et deuxième fentes (26, 28, 76, 78, 156, 158, 236, 238) en réaction au fait qu'un pêne de panneau (34, 84, 166) a été élevé manuellement dans les première et deuxième fentes (26, 28, 76, 78, 156, 158, 236, 238) par rapport au bord inférieur (30, 80, 160, 240) et dégagé manuellement dans les première et deuxième fentes (26, 28, 76, 78, 156, 158, 236, 238), et ledit bloque-pêne (22, 42, 92, 170, 250) étant conçu pour passer en position de déblocage du bloque-pêne (22, 42, 92, 170, 250) dans les première et deuxième fentes (26, 28, 76, 78, 156, 158, 236, 238) en réaction au fait qu'un pêne de panneau (34, 84, 166) dans les première et deuxième fentes (26, 28, 76, 78, 156, 158, 236, 238) a été élevé manuellement par rapport au bord inférieur (30, 80, 160, 240) dans les première et deuxième fentes (26, 28, 76, 78, 156, 158, 236, 238) sous l'effet d'un déplacement manuel supplémentaire du pêne de panneau dans les fentes.

2. Verrou selon la revendication 1, comprenant en outre :
un ressort (54, 56, 106, 130, 132, 180, 199, 215, 279, 291) dans l'espace (232) entre la première bride latérale et la deuxième bride latérale, le ressort (54, 56, 106, 130, 132, 180, 199, 215, 279, 291) étant relié de manière fonctionnelle au bloque-pêne (22, 42, 92, 170, 250) et sollicitant le bloque-pêne (22, 42, 92, 170, 250) vers la position de blocage du bloque-pêne (22, 42, 92, 170, 250) dans les première et deuxième fentes (26, 28, 76, 78, 156, 158, 236, 238).

3. Verrou selon la revendication 1 ou 2, comprenant en outre :
des première et deuxième coulisses de broches dans la première et deuxième bride latérale (148, 150, 228, 230) respective ; et
une broche présente sur le bloque-pêne (22, 42, 92, 170, 250), la broche pénétrant dans les première et deuxième coulisses de broches de la première et deuxième bride latérale (148, 150, 228, 230) respective.

4. Verrou selon la revendication 3, dans lequel en outre :
les première et deuxième coulisses de broches de la première et deuxième bride latérale (148, 150, 228, 230) respective sont oblongues ; et
la broche présente sur le bloque-pêne (22, 42, 92, 170, 250) pénétrant dans les première et deuxième coulisses de broches étant conçue de manière à effectuer des mouvements de translation en va-et-vient dans les première et deuxième coulisses de broches ; dans lequel de préférence en outre :
la broche est une première broche d'une paire de broches présentes sur le bloque-pêne (22, 42, 92, 170, 250) ; et
la paire de broches pénètre dans les première et deuxième coulisses de broches de la première et deuxième bride latérale (148, 150, 228, 230) respective.

5. Verrou selon la revendication 3, dans lequel en outre :
les première et deuxième coulisses de broches de la première et deuxième bride latérale (148, 150, 228, 230) respective sont circulaires, et
la broche présente sur le bloque-pêne (22, 42, 92, 170, 250) pénétrant dans les première et deuxième coulisses de broches est conçue pour des mouvements de rotation dans des sens opposés dans les première et deuxième coulisses de broches de la première et deuxième bride latérale (148, 150, 228, 230) respective.

6. Verrou selon l'une quelconque des revendications précédentes, dans lequel en outre :
les première et deuxième fentes (26, 28, 76, 78, 156, 158, 236, 238) sont conçues pour recevoir un pêne d'un panneau de plafond d'aéronef dans les première et deuxième fentes (26, 28, 76, 78, 156, 158, 236, 238).

7. Verrou selon l'une quelconque des revendications précédentes, dans lequel en outre :
les première et deuxième brides latérales (148, 150, 228, 230) ont un premier et deuxième bord inférieur respectif, et
les première et deuxième fentes (26, 28, 76, 78, 156, 158, 236, 238) s'étendent verticalement vers le haut à partir du premier et deuxième bord inférieur respectif de la première et deuxième bride latérale (148, 150, 228, 230) respective ; dans lequel de préférence en outre :
les première et deuxième fentes (26, 28, 76, 78, 156, 158, 236, 238) de la première et deuxième bride latérale (148, 150, 228, 230) respective s'étendent verticalement vers le haut à partir du premier et deuxième bord inférieur respectif et pénètrent dans la première et deuxième bride latérale (148, 150, 228, 230) respective, et
les première et deuxième fentes (26, 28, 76, 78, 156, 158, 236, 238) s'étendent ensuite horizontalement à travers la première et deuxième bride latérale (148, 150, 228, 230) respective.

8. Verrou selon l'une quelconque des revendications précédentes, comprenant en outre :
un dispositif de dégagement/rétablissement (108, 184, 264) du bloque-pêne (22, 42, 92, 170, 250) présent sur le corps (12, 62, 142, 222), le dispositif de dégagement/rétablissement (108, 184, 264) du bloque-pêne (22, 42, 92, 170, 250) étant automatiquement fonctionnel pour maintenir le bloque-pêne (22, 42, 92, 170, 250) dans la position de déblocage du bloque-pêne (22, 42, 92, 170, 250) dans les première et deuxième fentes (26, 28, 76, 78, 156, 158, 236, 238) en réaction au fait qu'un pêne de panneau (34, 84, 166) a été déplacé manuellement dans les première et deuxième fentes (26, 28, 76, 78, 156, 158, 236, 238), et le dispositif de dégagement/rétablissement (108, 184, 264) du bloque-pêne (22, 42, 92, 170, 250) étant manuellement fonctionnel pour dégager le bloque-pêne (22, 42, 92, 170, 250) de la position de déblocage dans les première et deuxième fentes (26, 28, 76, 78, 156, 158, 236, 238) et rétablir le bloque-pêne (22, 42, 92, 170, 250) dans la position de blocage dans les première et deuxième fentes (26, 28, 76, 78, 156, 158, 236, 238) en réaction à une manipulation manuelle du dispositif de dégagement/rétablissement (108, 184, 264) du bloque-pêne (22, 42, 92, 170, 250).

9. Verrou selon l'une quelconque des revendications précédentes, supportant de manière détachable une bride, le verrou comprenant :
un corps (12, 62, 142, 222) conçu pour être fixé sur une structure adjacente à une ouverture couverte par un panneau amovible ;
une première bride latérale présente sur le corps (12, 62, 142, 222) ;
une deuxième bride latérale présente sur le corps (12, 62, 142, 222), la première bride latérale et la deuxième bride latérale étant parallèles, un espace (232) étant présent entre la première bride latérale et la deuxième bride latérale ;
la première bride latérale présentant un premier bord inférieur ;
la deuxième bride latérale présentant un deuxième bord inférieur ;
la première bride latérale présentant une première fente s'étendant vers le haut dans le premier bord inférieur de la première bride latérale et pénétrant dans la première bride latérale ;
la deuxième bride latérale présentant une deuxième fente s'étendant vers le haut dans le deuxième bord inférieur de la deuxième bride latérale et pénétrant dans la deuxième bride latérale ;
la première bride latérale présentant une première coulisse de broche dans la première bride latérale ;
la deuxième bride latérale présentant une deuxième coulisse de broche dans la deuxième bride latérale ;
un bloque-pêne (22, 42, 92, 170, 250) dans l'espace (232) entre la première bride latérale et la deuxième bride latérale, le bloque-pêne (22, 42, 92, 170, 250) étant mobile dans l'espace (232) entre une position de blocage du bloque-pêne (22, 42, 92, 170, 250) dans la première fente et la deuxième fente et une position de déblocage du bloque-pêne (22, 42, 92, 170, 250) dans la première fente et la deuxième fente, ladite position de blocage du bloque-pêne (22, 42, 92, 170, 250) dans la première fente et la deuxième fente étant située plus bas que la position de déblocage du bloque-pêne (22, 42, 92, 170, 250) dans la première fente et la deuxième fente ;
une broche présente sur le bloque-pêne (22, 42, 92, 170, 250), la broche pénétrant dans la première coulisse de broche de la première bride latérale et la broche pénétrant dans la deuxième coulisse de broche de la deuxième bride latérale ; et
un ressort (54, 56, 106, 130, 132, 180, 199, 215, 279, 291) dans l'espace (232) entre la première bride latérale et la deuxième bride latérale, le ressort (54, 56, 106, 130, 132, 180, 199, 215, 279, 291) étant relié de manière fonctionnelle au bloque-pêne (22, 42, 92, 170, 250) et sollicitant le bloque-pêne (22, 42, 92, 170, 250) vers la position de blocage du bloque-pêne (22, 42, 92, 170, 250) dans la première fente et la deuxième fente.

10. Verrou selon la revendication 9, dans lequel en outre :
la première coulisse de broche de la première bride latérale est oblongue ou circulaire ;
la deuxième coulisse de broche de la deuxième bride latérale est oblongue ou circulaire ; et
la broche est conçue pour des mouvements linéaires de va-et-vient dans la première coulisse de broche de la première bride latérale et la deuxième coulisse de broche de la deuxième bride latérale, lorsque les coulisses de broches sont oblongues,
ou la broche est conçue pour des mouvements de rotation dans des sens opposés dans la première coulisse de broche de la première bride latérale et la deuxième coulisse de broche de la deuxième bride latérale, lorsque les coulisses de broches sont circulaires.

11. Verrou selon la revendication 10, dans lequel en outre :
la broche est une broche d'une paire de broches présentes sur le bloque-pêne (22, 42, 92, 170, 250) ; et
la paire de broches présentes sur le bloque-pêne (22, 42, 92, 170, 250) pénètre dans la première coulisse de broche de la première bride latérale, et la paire de broches présentes sur le bloque-pêne (22, 42, 92, 170, 250) pénètre dans la deuxième coulisse de broche de la deuxième bride latérale.

12. Verrou selon l'une quelconque des revendications 9 à 11, dans lequel en outre :
la première fente de la première bride latérale et la deuxième fente de la deuxième bride latérale sont conçues pour recevoir un pêne d'un panneau de plafond d'aéronef dans la première fente et la deuxième fente ; et
le bloque-pêne (22, 42, 92, 170, 250) pouvant passer de la position de blocage à la position de déblocage du bloque-pêne dans la première fente et la deuxième fente en réaction au fait que le pêne s'élève dans la première fente et la deuxième fente du fait que le panneau de plafond d'aéronef a été élevé manuellement, et/ou dans lequel en outre :
la première fente de la première bride latérale s'étend verticalement vers le haut à partir du premier bord inférieur de la première bride latérale et pénètre dans la première bride latérale ; et
la deuxième fente de la deuxième bride latérale s'étend verticalement vers le haut à partir du deuxième bord inférieur de la deuxième bride latérale et pénètre dans la deuxième bride latérale.

13. Verrou selon l'une quelconque des revendications 9 à 12, dans lequel en outre :
la première fente de la première bride latérale s'étend verticalement vers le haut à partir du premier bord inférieur de la première bride latérale et pénètre dans la première bride latérale, et la première fente de la première bride latérale s'étend ensuite horizontalement dans la première bride latérale ; et
la deuxième fente de la deuxième bride latérale s'étend verticalement vers le haut à partir du deuxième bord inférieur de la deuxième bride latérale et pénètre dans la deuxième bride latérale, et la deuxième fente de la deuxième bride latérale s'étend ensuite horizontalement dans la deuxième bride latérale.

14. Verrou selon l'une quelconque des revendications 9 à 13, comprenant en outre :
un dispositif de dégagement/rétablissement (108, 184, 264) du bloque-pêne (22, 42, 92, 170, 250) présent sur le corps (12, 62, 142, 222), le dispositif de dégagement/rétablissement (108, 184, 264) du bloque-pêne (22, 42, 92, 170, 250) étant automatiquement fonctionnel pour maintenir le bloque-pêne (22, 42, 92, 170, 250) dans la position de déblocage du bloque-pêne (22, 42, 92, 170, 250) dans les première et deuxième fentes (26, 28, 76, 78, 156, 158, 236, 238) en réaction au fait qu'un pêne de panneau (34, 84, 166) a été déplacé manuellement dans les première et deuxième fentes (26, 28, 76, 78, 156, 158, 236, 238), et le dispositif de dégagement/rétablissement (108, 184, 264) du bloque-pêne (22, 42, 92, 170, 250) étant manuellement fonctionnel pour dégager le bloque-pêne (22, 42, 92, 170, 250) de la position de déblocage et étant manuellement fonctionnel pour rétablir le bloque-pêne (22, 42, 92, 170, 250) dans la position de blocage du bloque-pêne (22, 42, 92, 170, 250) dans les première et deuxième fentes (26, 28, 76, 78, 156, 158, 236, 238) en réaction à une manipulation manuelle du dispositif de dégagement/rétablissement (108, 184, 264) du bloque-pêne (22, 42, 92, 170, 250).

15. Procédé de fixation amovible d'un panneau sur une ouverture au moyen d'un verrou selon l'une quelconque des revendications précédentes, comprenant :
la fixation du panneau sur l'ouverture en insérant manuellement un pêne de panneau (34, 84, 166) présent sur le panneau dans une fente d'un verrou qui est fonctionnel pour fixer de manière amovible le panneau relié au pêne de panneau (34, 84, 166) sur une ouverture adjacente au verrou ;
le passage d'un bloque-pêne (22, 42, 92, 170, 250) présent sur le verrou d'une position de blocage dans la fente à une position de déblocage dans la fente en réaction à l'insertion manuelle du pêne de panneau (34, 84, 166) dans la fente ;
le dégagement manuel du pêne de panneau (34, 84, 166) dans la fente ; et
la sollicitation du bloque-pêne (22, 42, 92, 170, 250) de la position de déblocage dans la fente à la position de blocage dans la fente, en fixant ainsi le panneau sur l'ouverture ; et comprenant de préférence en outre :
le retrait du panneau de ladite ouverture en élevant manuellement le pêne de panneau (34, 84, 166) dans la fente du verrou et en faisant ainsi passer le bloque-pêne (22, 42, 92, 170, 250) de la position de blocage du bloque-pêne (22, 42, 92, 170, 250) dans la fente à la position de déblocage du bloque-pêne dans la fente, en permettant ainsi au pêne de panneau d'être retiré de la fente et au panneau d'être retiré de l'ouverture.
